(19) Europäisches Patentamt
European Patent Office
Office européen des brevets

(11) **EP 4 230 447 A1**

(12) **EUROPEAN PATENT APPLICATION**
published in accordance with Art. 153(4) EPC

(43) Date of publication:
**23.08.2023 Bulletin 2023/34**

(21) Application number: **21879952.6**

(22) Date of filing: **06.10.2021**

(51) International Patent Classification (IPC):
*B60G 17/015* (2006.01)  *B60G 17/016* (2006.01)
*B60W 40/10* (2012.01)  *B60W 40/11* (2012.01)
*B60W 40/112* (2012.01)  *B60W 40/114* (2012.01)
*B60T 8/1755* (2006.01)  *B60W 10/00* (2006.01)
*B60W 10/20* (2006.01)  *B60W 10/22* (2006.01)
*B60W 30/045* (2012.01)

(52) Cooperative Patent Classification (CPC):
**B60G 17/015; B60G 17/016; B60T 8/1755;
B60W 10/00; B60W 10/20; B60W 10/22;
B60W 30/045; B60W 40/10; B60W 40/11;
B60W 40/112; B60W 40/114**

(86) International application number:
**PCT/JP2021/037011**

(87) International publication number:
**WO 2022/080212 (21.04.2022 Gazette 2022/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.10.2020  JP 2020173949
04.03.2021  JP 2021034820**

(71) Applicants:
• **NTN Corporation
Osaka-shi, Osaka 550-0003 (JP)**

• **School Judicial Person Ikutoku Gakuen
Atsugi-shi, Kanagawa 243-0292 (JP)**

(72) Inventors:
• **HIRATA, Junichi
Iwata-shi, Shizuoka 438-8510 (JP)**
• **YAMAKADO, Makoto
Atsugi-shi Kanagawa 243-0292 (JP)**

(74) Representative: **Maikowski & Ninnemann
Patentanwälte Partnerschaft mbB
Postfach 15 09 20
10671 Berlin (DE)**

(54) **VEHICLE POSTURE CONTROL DEVICE AND VEHICLE**

(57) Provided is a vehicle posture control device configured to be installed in a vehicle provided with an actuator configured to generate a roll moment. The device includes a roll moment calculator (24) and an actuator controller (25). The roll moment calculator (24) is configured to calculate a roll moment command value to control the actuator such that a roll motion is generated in conjunction with a yaw motion in the vehicle (1) during turning thereof. The roll moment calculator (24) is configured to calculate the roll moment command value for output, on the basis of a sideslip angular velocity and a vehicle velocity of the vehicle. The actuator controller (25) is configured to control the actuator by using the calculated roll moment command value.

Fig. 2

EP 4 230 447 A1

**Description**

CROSS REFERENCE TO THE RELATED APPLICATION

This application is based on and claims Convention priority to Japanese patent applications No. 2020-173949, filed October 15, 2020 and No. 2021-034820, filed March 4, 2021, the entire disclosures of which are herein incorporated by reference as a part of this application.

BACKGROUND OF THE INVENTION

(Field of the Invention)

The present invention relates to a vehicle motion control device for controlling the roll motion and, optionally, the pitch motion of a vehicle during turning thereof, and also relates to such a vehicle.

(Description of Related Art)

Techniques that control the roll of a vehicle generated during turning thereof to improve the ride comfort or maneuverability of the vehicle can be found in, for example, Patent Document 1 and Patent Document 2 cited below.

The techniques in Patent Document 1 are directed to varying the damping forces of dampers in suspensions so as to control the roll angle resulting from a lateral acceleration or the pitch angle resulting from a longitudinal acceleration. Roll angle control or pitch angle control with enhanced responsiveness can be achieved by varying the damping forces of the dampers on the basis of a derivative of a lateral acceleration or a derivative of a longitudinal acceleration.

The techniques in Patent Document 2 are directed to controlling the roll angle of a vehicle equipped with an active stabilizer or dampers with a variable damping force. By estimating the roll angle of a vehicle body as it is being generated, from a vehicle velocity and a steering angle that are sensed, and varying the damping characteristics or spring characteristics of suspensions on the basis of its deviation from a target roll angle, roll resulting in response to a lateral acceleration can be counteracted in such a way to narrow or keep at a constant the time gap between the occurrence of the lateral acceleration and the occurrence of roll.

[Related Document]

[Patent Document]

[Patent Document 1] JP Laid-open Patent Publication No. 2006-069527

[Patent Document 2] JP Laid-open Patent Publication No. 2007-106257

[Non-patent Document]

[Non-patent Document 1] M. Yamakado, R. Tanaka, Y. Kano, M. Abe, Y. Suzuki, S. Kosaka, W. Cheng. "Influence of Vehicle Body Motion on the Effects of G-Vectoring Control." (2017 JSAE Spring Convention) Proceedings
[Non-patent Document 2] T. Nagashima, Y. Nakai, Y. Suzuki, Y. Nakano, M. Yamakado, Y. Kano, M. Abe. "Influence of Heave Motion by Driving/ Braking Force Control on the Steering Characteristic." (2019 JSAE Fall Convention) Proceedings
[Non-patent Document 3] M. Abe, et al. "Estimation of Vehicle Side-Slip Angle for DYC by Using On-Board-Tire-Model." AVEC '98(1998.9)

SUMMARY OF THE INVENTION

Typically, the timing when a yaw rate appears in a vehicle in response to a steering input from a driver, as well as the timing when a lateral acceleration occurs, vary with a vehicle velocity. For example, during a low-speed travel regime, a lateral acceleration occurs in the vehicle in response to a steering input from a driver, and slightly later, a yaw rate appears. Roll, in turn, is generated with a delay from the yaw rate, due to a moment of inertia of the sprung mass and the damping forces of suspensions acting to delay the roll generation with respect to the lateral acceleration. During a high-speed travel regime, on the other hand, a yaw rate appears in a vehicle in response to a steering input from a driver, and later, a lateral acceleration occurs with a delay. Roll, in turn, is generated with a further delay from the lateral acceleration due to the impacts of a moment of inertia of the sprung mass and the damping forces of suspensions.

In both of Patent Documents 1 and 2, the amount of roll generated or the time gap until the generation thereof is controlled in relation to a lateral acceleration that occurs in a vehicle during turning thereof, without taking a yaw rate into account. Hence, the magnitude of the roll or the timing of the generation thereof depends on a lateral acceleration. Put differently, the roll motion is generated in a coordinated manner with a lateral motion, which is a form of translation motion, of the vehicle. Accordingly, a yaw motion and a roll motion which are rotational motions of the vehicle are not coordinated and, instead, are generated with different timings. A driver feels the yaw and the roll as separate motions and thus experiences little feeling of cohesiveness in the motion of the vehicle. Further, pitch control in Patent Document 1 is performed in relation to a longitudinal acceleration without taking a yaw motion during turning into consideration. Thus, a yaw motion and a pitch motion are not coordinated during turning and, instead, are generated with different timings. A driver experiences little feeling of cohesiveness in the motion of the vehicle.

An object of the present invention is to provide a vehicle posture control device, which can impart to a driver of a vehicle a feeling of cohesiveness in the motion of the vehicle during turning thereof and enhances the maneuverability thereof, and such a vehicle.

Now, the present invention will be described below with reference to the symbols in embodiments for the sake of discussion, namely, in order to facilitate the understanding of the invention.

A vehicle posture control device according to the present invention is configured to be installed in a vehicle 1 provided with an actuator (5, 4A, 30, 35) configured to generate a roll moment. The device includes: a roll moment calculator 24 configured to calculate a roll moment command value $M_\phi$ to control the actuator (5, 4A, 30, 35) such that a roll motion is generated in conjunction with a yaw motion in the vehicle 1 during turning thereof, with the roll moment calculator 24 being configured to calculate the roll moment command value $M_\phi$ for output, on the basis of a sideslip angular velocity and a vehicle velocity of the vehicle 1; and an actuator controller 25, 34A, (34, 47) configured to control the actuator (5, 4A, 30, 35) by using the calculated roll moment command value $M_\phi$.

Except for the speed of the vehicle, a value obtained by multiplying the speed of the vehicle with a certain coefficient, or a parameter proportionate to the speed of the vehicle - for example, a vehicle wheel velocity - may be used as said vehicle velocity. The coefficient is determined by at least one of a test or a simulation.

According to this configuration, the roll moment calculator 24 calculates, in the vehicle 1 during turning thereof, the roll moment command value $M_\phi$ to control the actuator such that a yaw rate and a roll angle are generated in the vehicle 1 during turning thereof in conjunction with each other, and uses the actuator controller 25, 34A, (34, 47) to generate a roll moment. Put differently, the actuator is used in such a way to generate a roll moment that counteracts a roll moment resulting from a sideslip angular velocity, on the basis of the idea that it is a sideslip angular velocity which causes a lateral acceleration to be shifted in relation to a yaw rate.

In the present invention, the term "yaw rate" is synonymous with the term "yaw motion," whereas the term "roll angle" is synonymous with the term "roll motion."

In this way, a roll motion can be coordinated so as to be in conjunction with a yaw motion, thereby imparting to a driver of the vehicle 1 a feeling of cohesiveness in the motion of the vehicle 1 and enhancing the maneuverability thereof.

Since the roll moment calculator 24 is configured to calculate the roll moment command value $M_\phi$ for output, on the basis of a sideslip angular velocity and a vehicle velocity of the vehicle 1, the calculation of the roll moment command value $M_\phi$ can be easily executed. For instance, a calculation formula or a map defining the relationship among the sideslip angular velocity, the vehicle velocity, and the roll moment command value $M_\phi$ can be provided to calculate the roll moment command value $M_\phi$ according to the definitions therein.

In the present invention, the roll moment calculator 24 may include a formula according to which the roll moment command value $M_\phi$ is calculated and which includes a term that compensates for phase delay of a roll motion resulting from a yaw rate.

In the context of this configuration, a roll moment that not only cancels out a roll moment resulting from a sideslip angular velocity but also compensates for a delay caused by the damping of a suspension 4, etc. is generated in the vehicle 1, with the delay of a roll motion relative to a yaw motion being shortened as a result thereof. A feeling of further cohesiveness is achieved by rotational motions (i.e., the yaw motion and the roll motion) of the vehicle 1, thereby further enhancing the maneuverability thereof.

In the present invention, the vehicle 1 may be further provided with an actuator configured to generate a pitch moment during turning thereof, and the vehicle posture control device may further include: a pitch moment calculator 33 configured to calculate a pitch moment command value $M_\theta$ in accordance with said yaw rate, with the pitch moment calculator 33 being configured to calculate the pitch moment command value Me, on the basis of at least the yaw rate and the vehicle velocity of the vehicle 1; wherein pitch moment calculator 33 controls the actuator by using the calculated pitch moment command value Me.

In the context of this configuration, not only are the generation of a yaw rate and the appearance of a roll angle coordinated so as to be in conjunction with each other in the vehicle 1 during the turning thereof, thereby narrowing the time gap therebetween as well, but also a pitch angle commensurate with the size of the yaw rate is generated in the vehicle 1. In this way, a roll motion and a pitch motion can be coordinated so as to be in conjunction with a yaw motion, which is a rotational motion of the vehicle 1, thereby imparting to a driver of the vehicle 1 a feeling of further cohesiveness in the motion of the vehicle and therefore further enhancing the maneuverability thereof.

When additionally implementing pitch control in such a manner, the pitch moment calculator 33 may be configured to provide the pitch moment command value $M_\theta$ as a value that compensates for a delay spanning between the generation of the pitch moment and the occurrence of change of a pitch angle in the vehicle 1 and caused by the characteristics of a suspension.

In the context of this configuration, a delay in the occurrence of change of a pitch angle in the vehicle 1 is compensated for. Hence, a driver of the vehicle 1 can experience a feeling of further cohesiveness in the motion of the vehicle 1. Therefore, the maneuverability thereof is further enhanced.

In the present invention, the actuator configured to generate the roll moment may be a device mounted to a suspension 4 and configured to apply a force in a vertical direction to the vehicle 1 through a constituent member of the suspension 4 to generate the roll moment.

In this case, an existing actuator can be utilized, with no change in the design of a vehicle body being necessary. For instance, an active stabilizer 5, an active suspension 4A, an in-wheel motor 30, or a brake 35 can be used as the actuator.

In the present invention, when additionally implementing the pitch control, at least one of the actuator configured to generate the roll moment or the actuator configured to generate the pitch moment may be a device mounted to a suspension 4 and configured to apply a force in a vertical direction to the vehicle 1 through a constituent member of the suspension 4 to generate either one of the roll moment or the pitch moment.

In this case, too, an existing actuator can be utilized, with no change in the design of a vehicle body being necessary. An active stabilizer 5, an active suspension 4A, an in-wheel motor 30, a brake 35, etc. can be used as the actuator in this context.

In the present invention, the actuator configured to generate the roll moment may be a device capable of producing a longitudinal force to a tire and configured to apply a vertical force to the vehicle 1 by cooperating with a link arrangement of a suspension with an anti-dive angle for the suspension 4 at a front wheel $2_f$ and an anti-squat angle at a rear wheel $2_r$.

In the context of this configuration, a brake 35 or an in wheel-motor 30 can be used as the actuator.

In the present invention, the actuator configured to generate the roll moment and the actuator configured to generate the pitch moment may be represented by a device capable of producing a longitudinal force to a tire and configured to apply a vertical force to the vehicle 1 by cooperating with a link arrangement of a suspension with an anti-dive angle for the suspension 4 at a front wheel and an anti-squat angle at a rear wheel.

In the context of this configuration, too, a brake 35 or an in wheel-motor 30 can be used as the actuator.

In the present invention, the pitch moment calculator 33 may be configured such that a larger pitch angle in the direction of forward diving is generated in the vehicle 1 in response to a greater absolute value of a yaw rate.

In this context, a forward diving pitch is more preferred.

In the context of this configuration, the vehicle posture control device may be configured to be installed in a vehicle 1 in which the magnitude of the product between the tangent of an anti-dive angle at a front wheel $2_f$ and the distance in a longitudinal direction between the point G of center of gravity of the vehicle and a point of a suspension 4 at the front wheel $2_f$ at which a spring and a damper thereof bear the sprung mass of the vehicle 1 is smaller than the magnitude of the product between the tangent of an anti-dive angle at a rear wheel $2_r$ and the distance in the longitudinal direction between the point G of center of gravity of the vehicle and a point of a suspension 4 at the rear wheel $2_r$ at which a spring and a damper thereof bear the sprung mass of the vehicle 1.

In the context of this configuration, an upward heave can be produced when a forward diving pitch is generated.

In the present invention, the roll moment calculator 24 may be configured to estimate the sideslip angular velocity from steering angle information sensed by a steering angle sensor 14 equipped to the vehicle. The steering angle information represents either a steering angle or a signal corresponding to a steering angle.

In this way, the need for a sensor exclusively for a sideslip angular velocity can be obviated.

In the present invention, the roll moment calculator 24 may be configured to estimate the sideslip angular velocity from a yaw rate sensed by a yaw rate sensor 15 equipped to the vehicle 1.

In this way, the need for a sensor exclusively for a sideslip angular velocity can be obviated.

In the present invention, the longitudinal force produced in roll control by means of the roll moment calculator 24 may be such that the total value of longitudinal forces to front and rear right wheels is an approximately equal value to the total value of longitudinal forces to front and rear left wheels.

The term "approximately equal value" may allow for the presence of a difference between the total value of longitudinal forces to the front and rear right wheels and the total value of longitudinal forces to the front and rear left wheels to such an extent that the posture of the vehicle does not become unstable during the turning thereof. This difference is determined as appropriate, for example, by at least one of a test or a simulation.

In this way, possible variation of a yaw rate as a result of the control can be kept small.

In the present invention, the longitudinal force produced in roll control or pitch control by means of the roll moment calculator 24 or the pitch moment calculator 33 may be such that the total value of longitudinal forces to front and rear right wheels is an approximately equal value to the total value of longitudinal forces to front and rear left wheels.

The term "approximately equal value" may allow for the presence of a difference between the total value of longitudinal forces to the front and rear right wheels and the total value of longitudinal forces to the front and rear left wheels to such an extent that the posture of the vehicle does not become unstable during the turning thereof. This difference is determined as appropriate, for example, by at least one of a test or a simulation.

In this case, too, possible variation of a yaw rate as a result of the control can be kept small.

In the present invention, the actuator controller (47) may be configured such that, when the actuator configured to generate the roll moment is a device (30, 35) that uses a braking force to generate the roll moment, approximately equal braking forces are applied to diagonally opposite wheels 2 of the vehicle 1.

When roll control is performed through braking in this configuration, possible variation of a yaw rate as a result of the control can be kept small along with a minimum deceleration of the vehicle.

A vehicle according to the present invention includes a vehicle posture control device according to one of the aforementioned configurations of the present invention.

According to a vehicle having this configuration, the generation of a yaw rate and the appearance of a roll angle can be coordinated so as to be in conjunction with each other in the vehicle during the turning thereof, thereby narrowing the time gap therebetween as well, letting a driver of the vehicle experience a feeling of cohesiveness in the motion of the vehicle, and enhancing the maneuverability thereof, as has been discussed in regard to the vehicle posture control device according to the present invention.

The present invention encompasses any combination of at least two features disclosed in the claims and/or the specification and/or the drawings. In particular, any combination of two or more of the appended claims should be equally construed as included within the scope of the present invention.

BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like or corresponding parts throughout the several views. In the figures,

Fig. 1 shows a block diagram illustrating a concept configuration of an automotive vehicle that is installed with a vehicle posture control device for use in a vehicle equipped with active stabilizers, in accordance with a first embodiment of the present invention;

Fig. 2 shows a block diagram illustrating a concept configuration of the vehicle posture control device;

Fig. 3 shows a chart illustrating the relationship among a yaw rate, a roll angle, and so on that occur in the vehicle when roll control is not implemented;

Fig. 4A shows a chart illustrating the relationship among a yaw rate, a roll moment, and so on that occur in the vehicle when roll control is implemented;

Fig. 4B shows a chart illustrating the relationship in an alternative variant among a yaw rate, a roll moment, and so on when the roll control is implemented;

Fig. 5 shows a block diagram illustrating a concept configuration of an automotive vehicle that is installed with a vehicle posture control device for use in a vehicle equipped with active suspensions, in accordance with another embodiment of the present invention;

Fig. 6 shows a block diagram illustrating a concept configuration of the vehicle posture control device;

Fig. 7A shows a diagram of the vehicle as viewed from the front, illustrating how vertical forces produced in the vehicle may act;

Fig. 7B shows a diagram of the vehicle as viewed from the rear, illustrating how vertical forces produced in the vehicle may act;

Fig. 7C shows a diagram of the vehicle as viewed from a lateral side, illustrating how vertical forces produced in the vehicle may act;

Fig. 8 shows a chart illustrating the relationship among a yaw rate, a roll moment, a pitch moment, and so on that occur in the vehicle when pitch control is implemented;

Fig. 9 shows a block diagram illustrating a concept configuration of an automotive vehicle that is installed with a vehicle posture control device for use in a vehicle equipped with in-wheel motors, in accordance with yet another embodiment of the present invention;

Fig. 10 shows a block diagram illustrating a concept configuration of the vehicle posture control device;

Fig. 11 shows a diagram of the vehicle as viewed from a lateral side, illustrating how pitch control implemented with the vehicle posture control device may act;

Fig. 12 shows a block diagram illustrating a concept configuration of an automotive vehicle that is installed with a vehicle posture control device for using a brake to implement posture control, in accordance with yet another embodiment of the present invention; and

Fig. 13 shows a block diagram illustrating a concept configuration of the vehicle posture control device.

DESCRIPTION OF EMBODIMENTS

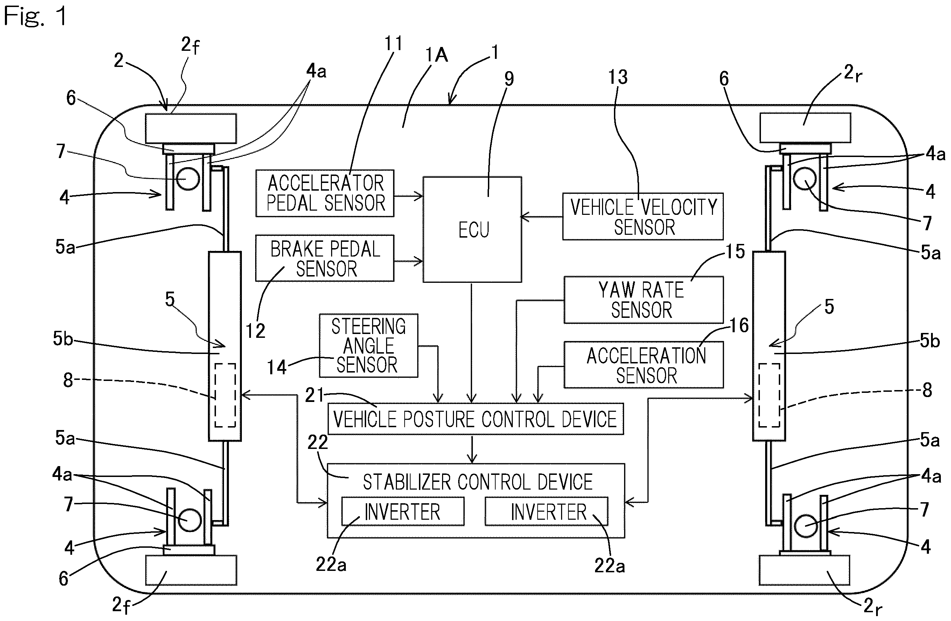

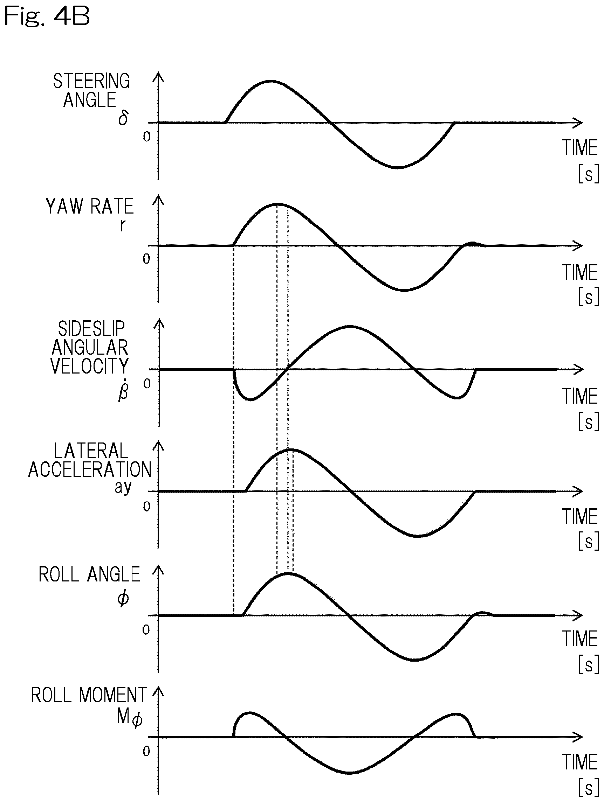

A first embodiment of the present invention will be described in connection with Figs. 1 to 4A and 4B. This embodiment pertains to example roll control for use in a scenario in which a vehicle 1 is equipped with active stabilizers 5 for front and rear wheels as an actuator that generates a roll moment to counteract roll.

This vehicle 1 has a vehicle body 1A that is equipped with front and rear suspension devices 4 that provide a support to wheels 2 in the form of front left and right wheels 2f and wheels 2 in the form of rear left and right wheels 2r, respectively, and that is also provided with the active stabilizers 5 each serving as a roll stiffness varying mechanism for a respective set of the front wheels 2f and rear wheels 2r.

Each of the front and rear suspension devices 4 includes a shock absorber 7, as well as upper and lower suspension arms 4a above and below its constituent members, with a knuckle 6 being coupled through the upper and lower suspension arms 4a to the vehicle body 1A and supporting each wheel 2 in such a way that the steering angle for that wheel 2 is variable. The upper and lower suspension arms 4a are each swingably supported at a support point on a vehicle body-side end thereof, such that the wheel 2 makes upward and downward strokes in response to the swings of these upper and lower suspension arms 4a. Positioned between the lower suspension arm 4a and the vehicle body 1A is the shock absorber 7 formed of a spring and a damper, with the shock absorber 7 supporting the vehicle body 1A in an elastically and vertically movable manner while, on the other hand, damping strokes in a vertical direction. Note that a suspension device 4 is sometimes simply referred to as a suspension 4.

Each of the active stabilizers 5 is formed of left and right stabilizer members 5a made of, for example, a torsion bar and a stabilizer actuator segment 5b coupling these in a mutually twistable fashion. By causing, through the stabilizer actuator segment 5b, the left and right stabilizer members 5a to be mutually twisted, the elastic force of a respective active stabilizer 5 as a whole is varied in such a way to control the roll stiffness of the vehicle 1. By way of example, the stabilizer actuator segment 5b is a rotary actuator formed of an electric motor 8 as a drive source and a speed reducer (not shown) that reduces the speed of the output from this electric motor 8 so that an output shaft thereof rotates at a reduced speed.

Propulsion for the vehicle 1 is provided by driving at least one set of the left and right wheels 2 in the form of the front wheels 2f or the left and right wheels 2 in the form of the rear wheels 2r by means of a propulsion drive source (not shown) such as, for example, an engine or a motor. The propulsion drive source is controlled according to an input from a driver, through a main ECU 9 that manages the basic operations of the vehicle 1. The main ECU 9 is also called a VCU and is made of a computer, etc.

As a class of sensors, an accelerator pedal sensor 11 that senses an input of the driver to an accelerator pedal, a brake pedal sensor 12 that senses an input to a brake pedal, a vehicle velocity sensor 13 that senses a vehicle velocity, a steering angle sensor 14 that senses a steering angle, a yaw rate sensor 15 that senses a yaw rate, and an acceleration sensor 16 that senses the acceleration of the vehicle 1 are equipped.

As control systems other than the ECU 9, a vehicle posture control device 21 for implementing roll control and a stabilizer control device 22 for controlling the active stabilizers 5 are equipped. The stabilizer control device 22 includes two inverters 22a, each of which controls the electric motor 8 of the respective active stabilizers 5 on the front and the rear. An inverter 22a is formed of a power circuitry unit that converts the DC power from a battery to an AC power for the purpose of driving said motor and a driver circuitry unit that regulates this power circuitry unit.

The outputs from the accelerator pedal sensor 11 and the brake pedal sensor 12 are input to the ECU 9 where they are converted to an accelerator command value and a brake command value to perform control of the propulsion drive source and a brake. The accelerator command value and the brake command value are, in turn, input to the vehicle posture control device 21. The vehicle velocity is also input through the ECU 9 to the vehicle posture control device 21. Further, the steering angle sensor 14, the yaw rate sensor 15, and the acceleration sensor 16 respectively output steering angle information, a real yaw rate, and a real acceleration that are also input to the vehicle posture control device 21.

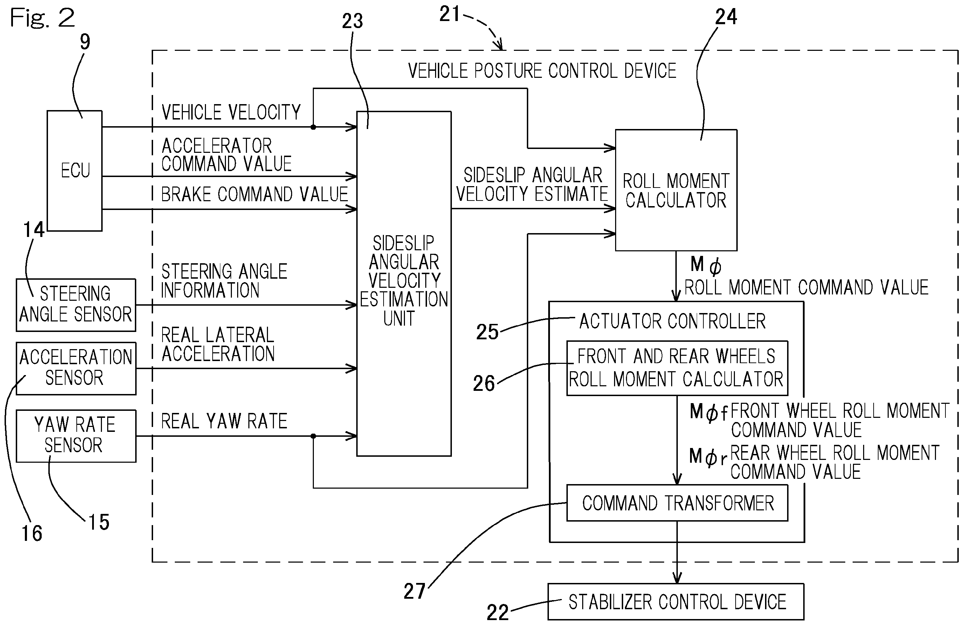

Fig. 2 shows a block diagram of the vehicle posture control device 21. The vehicle posture control device 21 includes a sideslip angular velocity estimation unit 23, a roll moment calculator 24, and an actuator controller 25 that generates a command value to be output to the stabilizer control device 22. The actuator controller 25 includes a front and rear wheels roll moment calculator 26 and a command transformer 27.

The sideslip angular velocity estimation unit 23 estimates a sideslip angular velocity according to a defined rule by using various values that are input thereto. When, for example, a nonlinear tire model is used as the defined rule to estimate the sideslip angular velocity, formulae (50) and (51) as discussed later are utilized.

The roll moment calculator 24 calculates, according to a defined rule, a roll moment command value $M_\phi$ to control the active stabilizers 5 which represent the actuator that generates in the vehicle 1 a roll moment for counteracting roll, such that a roll motion is generated in conjunction with a yaw motion in the vehicle 1 during turning thereof. More specifically, the roll moment calculator 24 uses an estimate of the sideslip angular velocity, the vehicle velocity, and the real yaw rate to calculate a roll moment required for roll control by employing formula (5) as discussed later and output the same in the form of a roll moment command value $M_\phi$.

The front and rear wheels roll moment calculator 26 determines the allocation of the roll moment command value $M_\phi$ between the front and rear wheels. The determined allocation is output in the form of a front wheels roll moment command value $M_{\phi f}$ to be generated by an active stabilizer 5 for the front wheels 2f and a rear wheels roll moment command value $M_{\phi r}$ to be generated by an active stabilizer 5 for the rear wheels 2r.

The front wheels roll moment command value $M_{\phi f}$ and the rear wheels roll moment command value $M_{\phi r}$ that are output are transformed by the command transformer 27 into values compatible to be inputs that the stabilizer control device 22 can handle - for example, a motor command torque - for output to the stabilizer control device 22. Note that, if the stabilizer control device 22 is configured to be able to handle a roll moment command value as an input thereto, the command transformer 27 is not required.

The stabilizer control device 22 controls the active stabilizers 5 for the front wheels $2_f$ and the rear wheels $2_r$, according to the front wheels roll moment command value $M_{\phi f}$ and the rear wheels roll moment command value $M_{\phi r}$ that are output from the vehicle posture control device 21, or according to those commands after having been transformed by the command transformer 27.

According to the vehicle posture control device and the vehicle 1 having the above configuration, the generation of a yaw rate and the appearance of a roll angle are coordinated so as to be in conjunction with each other in the vehicle 1 during the turning thereof, thereby narrowing the time gap therebetween as well. In this way, a roll motion can be coordinated so as to be in conjunction with a yaw motion which is a rotational motion of the vehicle 1, thereby imparting to a driver of the vehicle 1 a feeling of cohesiveness in the motion of the vehicle and therefore enhancing the maneuverability thereof.

The mechanism, benefits, and a particular implementation of the above configuration will be described.

Firstly, the fundamental concept of roll control will be touched upon.

The followings are general formulae for a two-wheel model intended to only describe a translation motion, in a lateral direction, and a rotational motion, about a vertical axis, of the vehicle 1. The coordinate system is such that the x-axis represents a longitudinal direction of the vehicle with a forward direction being positive, the y-axis represents a lateral direction with a left direction being positive, and the z-axis represents a vertical direction with an upward direction being positive:

[Math 1]

$$mV(\dot{\beta} + r) = 2Y_f + 2Y_r \qquad (1)$$

$$I\dot{r} = 2Y_f l_f - 2Y_r l_r \qquad (2)$$

wherein $\dot{\beta}$ and $\dot{r}$ are represented as β"·" and r"·" respectively.

The formulae (1) and (2) describe the relationship between a sideslip angle β and a yaw rate r of the vehicle, which appear in the vehicle during turning thereof. In the formula (1), m is a vehicle mass, V is a vehicle velocity, β"·" (which is called a dot beta) is a sideslip angular velocity of the vehicle, $Y_f$ is a cornering force acting on a front wheel (i.e., a lateral force to a front wheel), and $Y_r$ is a cornering force acting on a rear wheel (i.e., a lateral force to a rear wheel), whereas in formula (2), r"·" is a yaw angle acceleration, $l_f$ is a distance between the point of center of gravity of the vehicle and a vehicle axle for the front wheels, $l_r$ is a distance between the point of center of gravity of the vehicle and a vehicle axle for the rear wheels, and I is a yaw moment of inertia of the vehicle.

A lateral acceleration $a_y$ of the vehicle in the two-wheel model is provided by formula (3):
[Math 2]

$$a_y = V(\dot{\beta} + r) \qquad (3)$$

Formula (3) shows that a lateral acceleration $a_y$ is composed of a lateral acceleration resulting from the sideslip angular velocity $\beta^{"\cdot"}$ of the vehicle and a lateral acceleration resulting from the yaw rate r. It can be seen that, in a transient state during turning - as opposed to steady turning during which the sideslip angular velocity $\beta^{"\cdot"}$ of the vehicle becomes zero - the lateral acceleration $a_y$ is shifted by the lateral acceleration $V\beta^{"\cdot"}$ resulting from the sideslip angular velocity $\beta^{"\cdot"}$ of the vehicle. That is, the lateral acceleration $a_y$ is shifted its phase, in relation to the yaw rate r by an amount corresponding to the sideslip angular velocity $\beta^{"\cdot"}$ of the vehicle.

Next, the two-wheel model is extended on the basis of the idea that the lateral acceleration $a_y$ acts on the center of gravity of the vehicle, thereby causing a roll angle $\phi$ to appear in the vehicle. The roll angle $\phi$ appears according to formula (4) whereby $h_s$ is a distance between the point of center of gravity of the vehicle and the axis of roll, $K_\phi$ is a roll stiffness, $C_\phi$ is a roll damping coefficient, and $I_\phi$ is a roll moment of inertia.

The symbol s is a Laplace operator. By assuming that the unsprung mass is considerably small relative to the vehicle mass, the sprung mass of the vehicle is seen as equal to the vehicle mass m.
[Math 3]

$$\phi(s) = \frac{mh_s a_y(s)}{I_\phi s^2 + C_\phi s + K_\phi}$$

$$(4)$$

Formula (4) shows that the roll angle $\phi$ appears with a delay in relation to the lateral acceleration $a_y$ (or the roll moment $mh_s a_y$) due to the damping characteristics of suspensions and a roll moment of inertia of the vehicle.

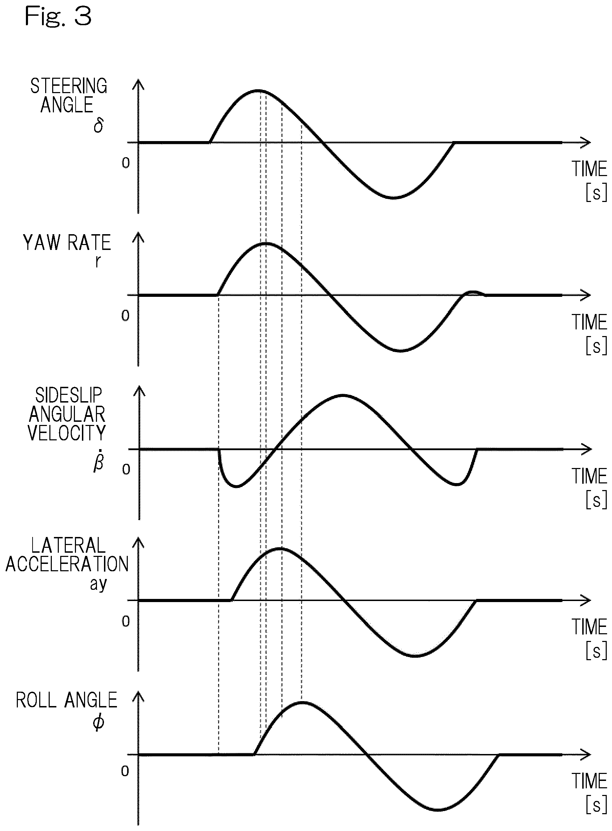

In regard to the above, fig. 3 depicts various parameters for a particular instance of a single lane change in which a lane change shifting from a lane being travelled to another lane is performed once during a high-speed travel regime. During a high-speed travel regime, the yaw rate r appears in response to steering, while the lateral acceleration $a_y$ occurs later than the yaw rate r due to the effect of the sideslip angular velocity $\beta^{"\cdot"}$, thereby leading to the further delayed appearance of the roll angle $\phi$. This delay of the roll motion relative to the yaw motion widens with an increase in the vehicle velocity.

This embodiment is characterized by generating a roll moment through the active stabilizers 5 equipped to the vehicle 1 such that a yaw motion and a roll motion are generated in a unified manner to coordinate the yaw motion and the roll motion in conjunction with each other and shorten the delay that occurs between the yaw motion and the roll motion as well.

In order to coordinate the roll motion with the yaw motion so as to be in conjunction with each other, a roll moment which cancels out a roll moment resulting from the lateral acceleration $a_y$ during turning and which provides a roll moment resulting from the yaw motion may be imparted to the vehicle body as the roll moment command value $M_\phi$. Further, if the delay that occurs between the yaw motion and the roll motion is to be shortened, the roll moment generated upon imparting a yaw motion to the vehicle body can be selected to be a value with which a delay resulting from the damping of suspensions, etc. has been corrected. To describe these in terms of an equation, formula (A) can be derived:
[Math 4]

$$M_\phi(s) = -mh_s a_y(s) + mh_s Vr(s)\left(1 + \frac{C_\phi}{K_\phi}s + \frac{I_\phi}{K_\phi}s^2\right) \qquad (A)$$

By further reorganizing formula (A) with formula (3), the roll moment $M_\phi$ to be generated is expressed by formula (5):
[Math 5]

$$M_\phi(s) = -mh_s V\dot{\beta}(s) + mh_s Vr(s)\left(\frac{C_\phi}{K_\phi}s + \frac{I_\phi}{K_\phi}s^2\right) \qquad (5)$$

Accordingly, it is shown that what is required is to generate in the vehicle a roll moment that has cancelled out a roll motion resulting from the sideslip angular velocity $\beta^{"\cdot"}$, which is the cause of the lateral acceleration $a_y$ being delayed with respect to the yaw rate r, and which has further compensated for a delay resulting from the damping of suspensions, etc. The roll moment calculator 24 performs a calculation according to formula (5) and outputs the roll moment command value $M_\phi$ as the calculation result.

The first term on the right side of formula (5) is a term for cancelling out a roll motion resulting from the sideslip angular velocity β"·", while the second term on the right side thereof is for compensating for a delay resulting from the damping of suspensions, etc. In other words, the first term is a term for allowing only a roll moment resulting from a yaw rate to be applied to the vehicle such that a yaw motion (i.e., the yaw rate) and a roll motion (i.e., a roll angle) are coordinated to be in conjunction with each other, while the second term is a term for compensating for phase delay in a roll moment resulting from the yaw rate. Only the first-order delay may be compensated for, though the second-order delay is shown to be done so as well. The phase delay compensation can be performed only with respect to the first-order delay to do away with higher-order derivative calculations, thereby reducing a calculation load and keeping small the impacts of possible noise contained in the yaw rate signal. Even with the first term on the right side of formula (5) alone, a yaw motion (i.e., a yaw rate) and a roll motion (i.e., a roll angle) can be coordinated so as to be in conjunction with each other, thereby improving the ride comfort and the maneuverability of the vehicle. By further adding the second term on the right side thereof, a delay of a roll motion which is relative to a yaw motion and caused by suspensions is shortened, thereby inducing a feeling of further cohesiveness in rotational motions of the vehicle. Since the roll motion $M_\phi$ can be calculated from the sideslip angular velocity β"·", the yaw rate r, and the vehicle velocity V as they are being generated in the vehicle during turning thereof, there is no need to set a target value for the roll angle φ or the roll angular velocity in advance.

Formula (B) is for a scenario where the roll moment $M_\phi$ is calculated by using the first term of formula (5) alone:
[Math 6]

$$M_\phi(s) = -mh_s V\dot{\beta}(s) \qquad (B)$$

Fig. 4B depicts the behavior of the vehicle in an instance where the roll moment $M_\phi$ according to formula (B) is generated by an actuator mounted in the vehicle. In this case, the roll moment calculator 24 (Fig. 2) performs a calculation according to formula (B) and outputs the roll moment command value $M_\phi$ as the calculation result.

Just as in Fig. 3, fig. 4B pertains to an instance in which a single lane change is performed during a high-speed travel regime. The roll moment $M_\phi$ causes the roll angle φ to appear in conjunction with the yaw rate r in the vehicle. In Fig. 4B, the roll angle appears later than the yaw rate due to the damping of suspensions, etc. Still, the roll angle φ appears earlier than the lateral acceleration $a_y$. In this way, a feeling of cohesiveness is achieved in rotational motions (i.e., a yaw motion and a roll motion) of the vehicle, thereby enhancing the maneuverability thereof.

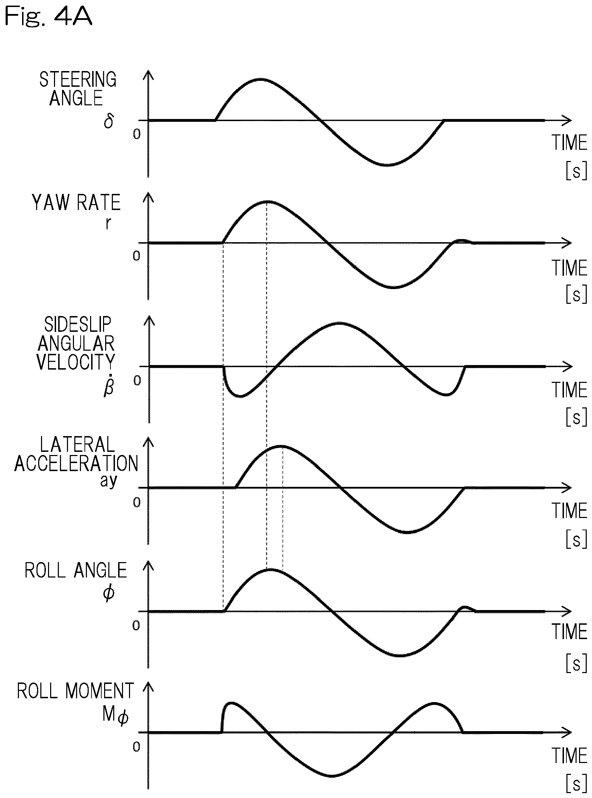

Fig. 4A depicts the behavior of the vehicle in an instance where the roll moment $M_\phi$ according to formula (5) is generated by an actuator mounted in the vehicle. Just like the one in Fig. 3, this pertains to an instance in which a single lane change is performed during a high-speed travel regime. The roll moment $M_\phi$ causes the roll angle φ to appear in the vehicle with a phase closer to that of the yaw rate r. In this way, a feeling of cohesiveness is achieved in rotational motions (i.e., a yaw motion and a roll motion) of the vehicle, thereby enhancing the maneuverability thereof.

Also, the roll angle φ appears earlier than the lateral acceleration $a_y$, thereby allowing a driver to immediately feel the change in the yaw rate r that occurs in the vehicle by perceiving the change in the roll angle φ. An actual vehicle test has confirmed that the maneuverability of the vehicle 1 is enhanced thereby. During the test, a vehicle that had been tailored so as to exhibit an oversteering tendency by adjusting the tire grip forces of its rear wheels $2_r$ to be lower than those of its front wheels $2_f$ was used to conduct slalom driving. Without the use of control according to this embodiment, the rear wheels would start slipping in response to an increase in the lateral acceleration, before the generation of roll takes place (see Fig. 3). Then, a driver would feel as if the rear wheels have suddenly started to slip. For this reason, steering correction had to be made after the vehicle 1 had shown spinning behavior and had disturbed the behavior of the vehicle. With the use of control according to this embodiment, roll appeared in conjunction with a yaw rate and earlier than a lateral acceleration (Figs. 4A and 4B). Therefore, a driver could feel an increase of the yaw rate r through an increase of the roll angle φ, thereby easily foreseeing the moment at which the rear wheels would stat slipping laterally. By being able to foresee the time when the rear wheels would start slipping, the driver could prepare for early steering correction to be performed while at the same time checking whether the rear wheels have actually started slipping, and therefore was able to mitigate the occurrence of a large disturbance in the behavior of the vehicle.

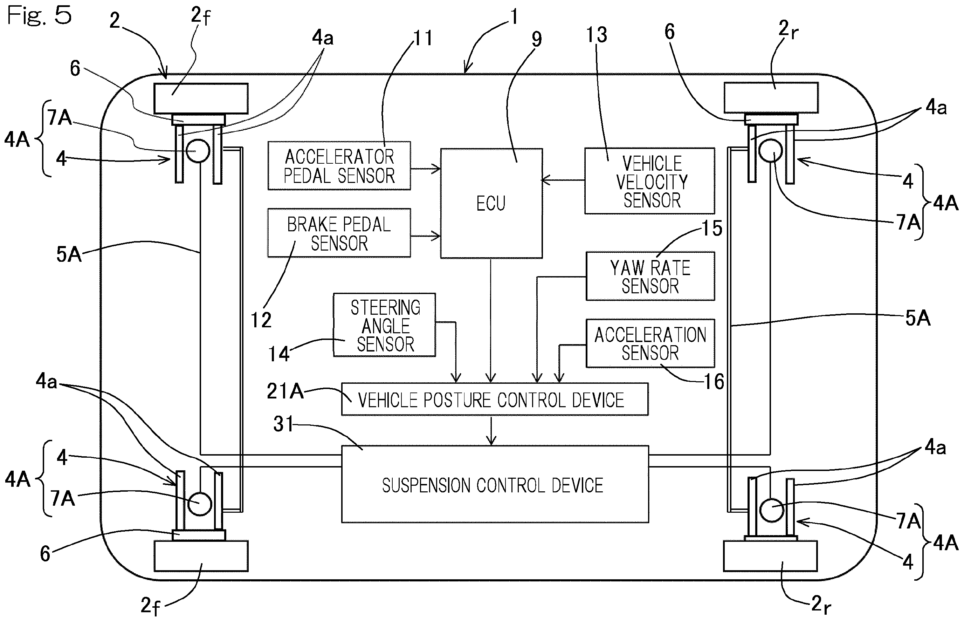

Figs. 5 to 8 depict another embodiment of the present invention. The same features as those of the first embodiment will apply to each of the embodiments that are illustrated below, except for those that are particularly discussed.

The embodiment of Figs. 5 to 8 refers to an example in which active suspensions 4A are provided in place of the active stabilizers 5 in the first embodiment (Fig. 1), as an actuator that generates a roll moment and a pitch moment in the vehicle 1 for the purpose of counteracting roll and for pitch control. Each of the active suspensions 4A is formed of a suspension 4 and a support portion vertical force varying mechanism 7A.

Each of the active suspensions 4A used in this embodiment includes suspension arms 4a, with a knuckle 6 being coupled through these upper and lower suspension arms 4a to the vehicle body 1A and supporting a respective wheel 2 in such a way that the steering angle for that wheel 2 is variable. The upper and lower suspension arms 4a are each swingably supported at a support point on a vehicle body-side end thereof, such that the wheel 2 makes upward and downward strokes in response to the swings of these upper and lower suspension arms 4a. Positioned between the lower suspension arm 4a and the vehicle body 1A is a shock absorber (not shown) formed of a spring and a damper. The support portion vertical force varying mechanism 7A is arranged so as to change the support position of this shock absorber up and down or so as to be able to vary a vertical force acting on said support position. The support portion vertical force varying mechanism 7A is made of, for example, a drive source such as hydraulics or a motor, and a linear motion device (both not shown). Stabilizers 5A are also provided.

A suspension control device 31 for controlling the active suspensions 4A is provided.

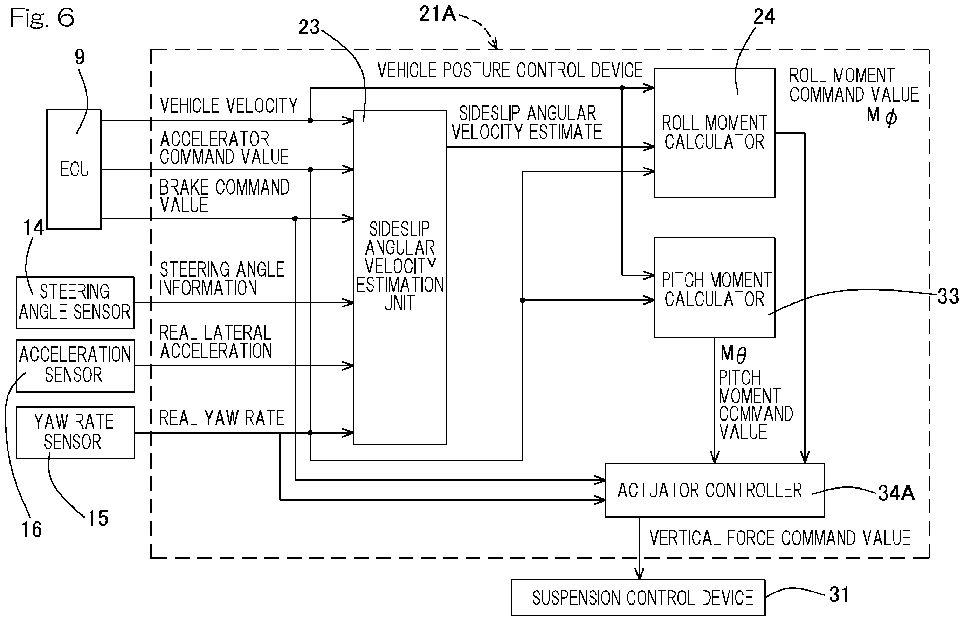

Fig. 6 shows a block diagram of a vehicle posture control device 21A, in accordance with this embodiment. To provide pitch control in addition to roll control, this embodiment differs from the block diagram of the aforementioned embodiment of Fig. 2 by the addition of a pitch moment calculator 33 and by being equipped with an actuator controller 34A for countering roll and for pitch control. A roll moment calculator 24 has the same configuration as that discussed in connection with Fig. 2. The actuator controller 34A calculates a command value to control the support portion vertical force varying mechanism 7A of each active suspension 4A, according to a roll moment command value calculated by the roll moment calculator 24 and a pitch moment command value calculated by the pitch moment calculator 33, and outputs the same to the suspension control device 31. The suspension control device 31 controls the support portion vertical force varying mechanism 7A of each active suspension 4A (Fig. 5), according to a command value that is input thereto.

The pitch moment calculator 33 may calculate the pitch moment command value Me, on the basis of at least a yaw rate and a vehicle velocity of the vehicle 1. It is also preferred that the pitch moment calculator 33 provides the pitch moment command value $M_\theta$ as a value that compensates for a delay spanning between the generation of a pitch moment and the occurrence of change of a pitch angle in the vehicle 1 and caused by characteristics such as the damping of springs or dampers that the active suspensions 4A (Fig. 5) have.

In this way, a delay in the occurrence of change of a pitch angle in the vehicle 1 is compensated for. Hence, a driver of the vehicle 1 can experience a feeling of further cohesiveness in the motion of the vehicle 1. Therefore, the maneuverability thereof is further enhanced.

Next, pitch control will be described in more particular terms.

Just as in roll control, a pitch motion is coordinated so as to be in conjunction with a yaw motion which is a rotational motion of the vehicle 1. Consequently, a driver of the vehicle 1 experiences a feeling of cohesiveness in the motion of the vehicle 1, with the ride comfort and the maneuverability thereof being thereby improved. This embodiment causes the active suspensions 4A, each of which is an actuator equipped to the vehicle 1, to generate a pitch moment such that a yaw motion and a pitch motion are generated in conjunction with each other and in a unified manner. The pitch moment $M_\theta$ to be generated is expressed by formula (6):

[Math 7]

$$M_\theta(s) = kmhV \left| r(s) \left( 1 + \frac{C_\theta}{K_\theta} s + \frac{I_\theta}{K_\theta} s^2 \right) \right|$$

$$(6)$$

whereby k is a control gain, h is the height of center of gravity of the vehicle, $K_\theta$ is a pitch stiffness, $C_\theta$ is a pitch damping coefficient, and $I_\theta$ is a pitch moment of inertia.

Formula (6) describes a pitch moment $M_\theta$ that acts on the point G of center of gravity of the vehicle 1. Provided that the vehicle velocity V is positive, the pitch moment $M_\theta$ is proportional to the magnitude of the lateral acceleration Vr resulting from a yaw rate r, with a delay due to the damping characteristics of suspensions 4, etc. having been compensated for. Only the first-order delay may be compensated for, though the second-order delay is shown to be done so as well in formula (6). The phase delay compensation can be performed only with respect to the first-order delay to do away with higher-order derivative calculations, thereby reducing a calculation load and keeping small the impacts of possible noise contained in the yaw rate signal.

The size of the control gain k is a value determined by a simulation or an experiment and is set to a value smaller than 1 (for example, no more than 0.1). Also, the direction of the pitch moment changes with whether the control gain k is positive or negative. With a positive gain, the pitch moment puts the vehicle in a forward diving posture, whereas with a negative gain, the pitch moment puts the vehicle 1 in a rearward squatting posture. Our previous research shows that it is preferred to generate a forward diving pitch in a vehicle during turning thereof, to improve the maneuverability thereof. This is described in detail in Non-patent Document 1.

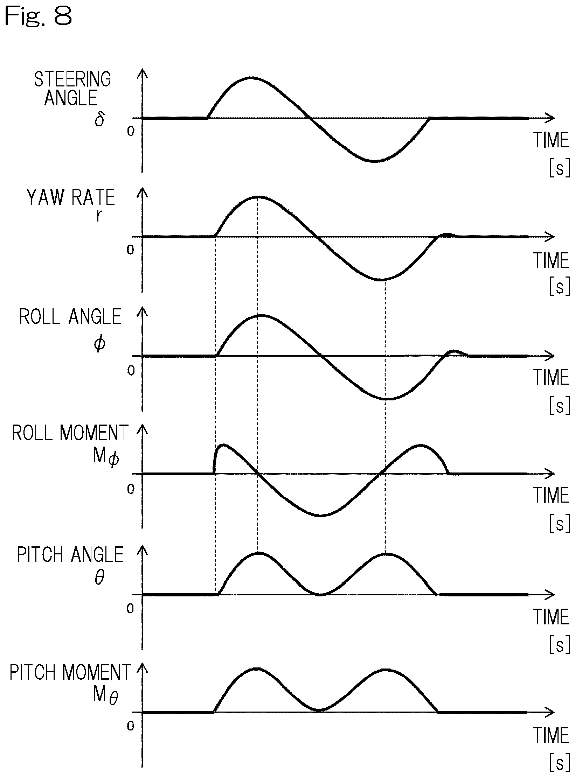

Fig. 8 depicts the behavior of the vehicle in an instance where the pitch moment $M_\theta$ according to formula (6) is generated by an actuator mounted in the vehicle and is additionally applied to the example of Fig. 4A. The pitch moment $M_\theta$ causes the vehicle 1 to have a forward diving pitch commensurate with an increase in the yaw rate $\gamma$. In this context, the pitch moment calculator 33 (Fig. 6) may be configured such that a larger pitch angle in the direction of forward diving is generated in the vehicle 1 (Fig. 5) in response to a greater absolute value of the yaw rate.

It is desirable that each of the active suspensions 4A, which is an actuator equipped to the vehicle to generate the abovementioned roll moment $M_\phi$ and pitch moment Me, be configured to apply a force in a vertical direction to the sprung mass of the vehicle 1 through the shock absorber, which is a constituent member of the suspension device 4. Given that the constituent members of the suspension device 4 are designed to support all of the forces that act on tires and that the vehicle body 1A mounted thereon also comes with the rigidity and strength expected therefor, additional reinforcements, etc. can be omitted. Further, a typical suspension 4 is positioned in each of the four corners of a vehicle, just as in this embodiment. Accordingly, each vertical force used to produce the roll moment $M_\phi$ and pitch moment $M_\theta$ can be kept small.

Except for active stabilizers like the ones described in Patent Document 2, existing devices such as the active suspensions 4A capable of actively producing a vertical force as described in this embodiment can be utilized as actuators that can be positioned in such locations of suspensions.

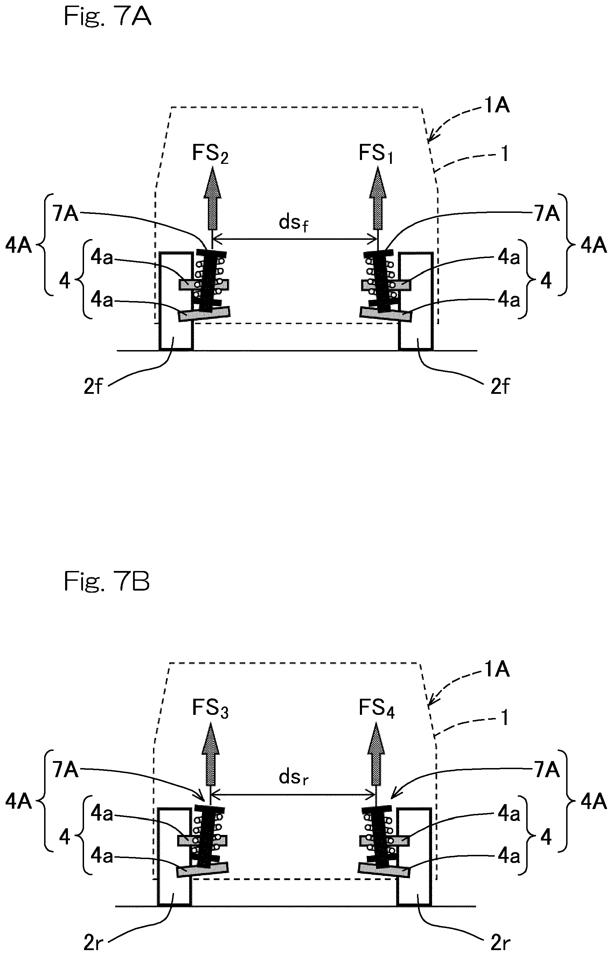

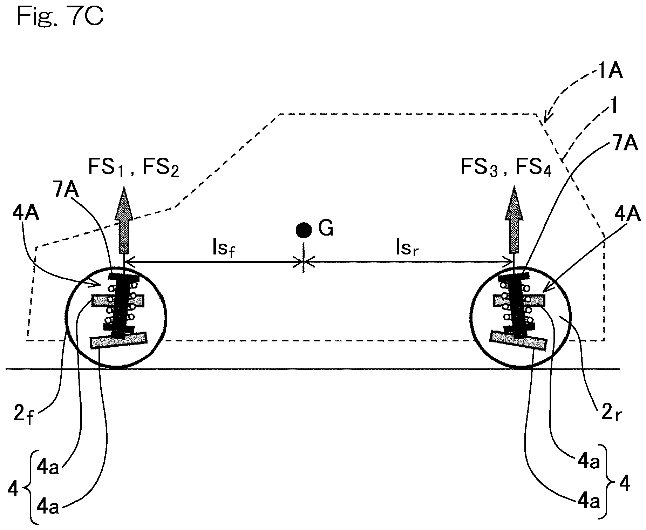

In connection with Figs. 7A to 7C, a vertical force produced in a suspension by means of an actuator is denoted as $FS_i$. A vertical force $FS_i$ acts through a spring and a damper bearing the sprung mass of the vehicle. These spring and damper are constituent members of each suspension 4. The symbol i denotes the positions of suspensions in a four-wheeled vehicle, with 1 indicating a front left wheel, 2 indicating a front right wheel, 3 indicating a rear left wheel, and 4 indicating a rear right wheel. This also applies to the embodiments that are mentioned later.

For the purpose of a simple discussion, it is assumed that the spring and the damper are arranged on the same axis. As shown in Figs. 7A to 7C, the distance in a longitudinal direction between the point G of center of gravity of the vehicle and the position of a point where the spring and the damper at a front wheel $2_f$ bear the sprung mass of the vehicle 1 (i.e., bearing point) is indicated as $ls_f$, and the distance in the longitudinal direction between the point G of center of gravity of the vehicle and the position of a bearing point of the spring and the damper at a rear wheel $2_r$ is indicated as $ls_r$. Also, the distance between the bearing points of the springs and the dampers of left and right suspensions 4 for front wheels $2_f$ is indicated as $ds_f$, while the distance between the bearing points of the springs and the dampers of left and right suspensions 4 for rear wheels $2_r$ is indicated as $ds_r$.

The roll moment $M_\phi$ and pitch moment $M_\theta$ are generated through the vertical forces $FS_i$ in the following ways:
[Math 8]

$$M_\phi = \frac{ds_f}{2}(FS_1 - FS_2) + \frac{ds_r}{2}(FS_3 - FS_4)$$

$$(7)$$

$$M_\theta = -ls_f(FS_1 + FS_2) + ls_r(FS_3 + FS_4)$$

$$(8)$$

Note that, in case of an active stabilizer, the vertical forces on the left and the right are equal in size and have opposite signs, and therefore the pitch moment $M_\theta$ is not generated. If equal vertical forces were to be produced in the front and the rear, then, the vertical forces $FS_i$ for generating the roll moment $M_\phi$ could be calculated as follows:
[Math 9]

$$FS_1 = \frac{M_\phi}{2(ds_f + ds_r)}$$

(9)

$$FS_2 = -\frac{M_\phi}{2(ds_f + ds_r)}$$

(10)

$$FS_3 = \frac{M_\phi}{2(ds_f + ds_r)}$$

(11)

$$FS_4 = -\frac{M_\phi}{2(ds_f + ds_r)}$$

(12)

Similarly, if the use of active suspensions 4A is to be considered, the vertical forces $FS_i$ for generating the roll moment $M_\phi$ and the pitch moment $M_\theta$ can be calculated as follows, for example, on the condition that the sum of the vertical forces is zero so as not to produce any heave and the vertical force at a front left wheel and the vertical force at a diagonally opposite, rear right wheel are equal but have opposite signs:
[Math 10]

$$FS_1 = \frac{M_\phi}{ds_f + ds_r} - \frac{M_\theta}{2(ls_f + ls_r)}$$

(13)

$$FS_2 = -\frac{M_\phi}{ds_f + ds_r} - \frac{M_\theta}{2(ls_f + ls_r)}$$

(14)

$$FS_3 = \frac{M_\phi}{ds_f + ds_r} + \frac{M_\theta}{2(ls_f + ls_r)}$$

(15)

$$FS_4 = -\frac{M_\phi}{ds_f + ds_r} + \frac{M_\theta}{2(ls_f + ls_r)}$$

$$(16)$$

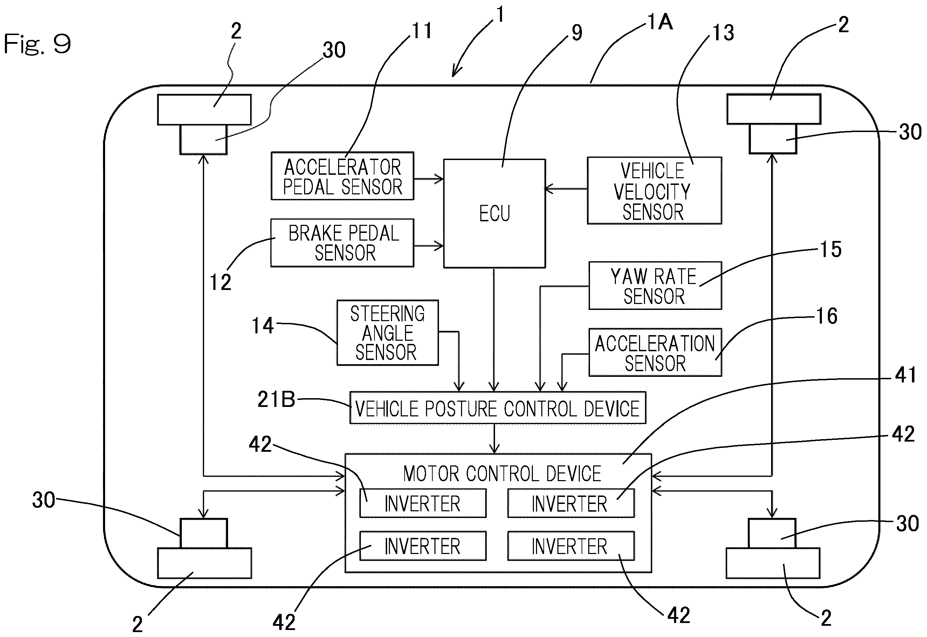

Figs. 9 to 11 depict yet another embodiment of the present invention. In this embodiment, in-wheel motors (IWMs) 30 are equipped to four wheels which are front and rear sets of left and right wheels in place of the active stabilizers 5 in the first embodiment (Fig. 1), as an actuator that generates a roll moment, etc. in a vehicle 1 to which this vehicle posture control device 21B is applied, for the purpose of counteracting roll and for pitch control. Each of the in-wheel motors 30 is formed of a motor and a speed reducer or is formed of a motor alone, with an entirety or a large part thereof being arranged inside a wheel 2. The in-wheel motors 30 which are each a drive source for providing propulsion drive and braking can generate in the vehicle 1 a roll moment for counteracting roll and can also generate a pitch moment for pitch control, through the regulation of the relationship in braking/driving force (i.e., longitudinal force) among the four wheels.

In this embodiment, as a control system, a motor control device 41 for controlling the in-wheel motors 30 is equipped. The motor control device 41 implements control of the in-wheel motors 30 for roll control and pitch control under the command of the vehicle posture control device 21B, in addition to executing normal travel and braking control that is commensurate with an accelerator command value and a brake command value.

The motor control device 41 includes inverters 42 that respectively control an in-wheel motor 30 of each wheel 2. Each of the inverters 42 is formed of a large power unit that converts the DC power from a battery to an AC power and a controller unit that regulates the output therefrom.

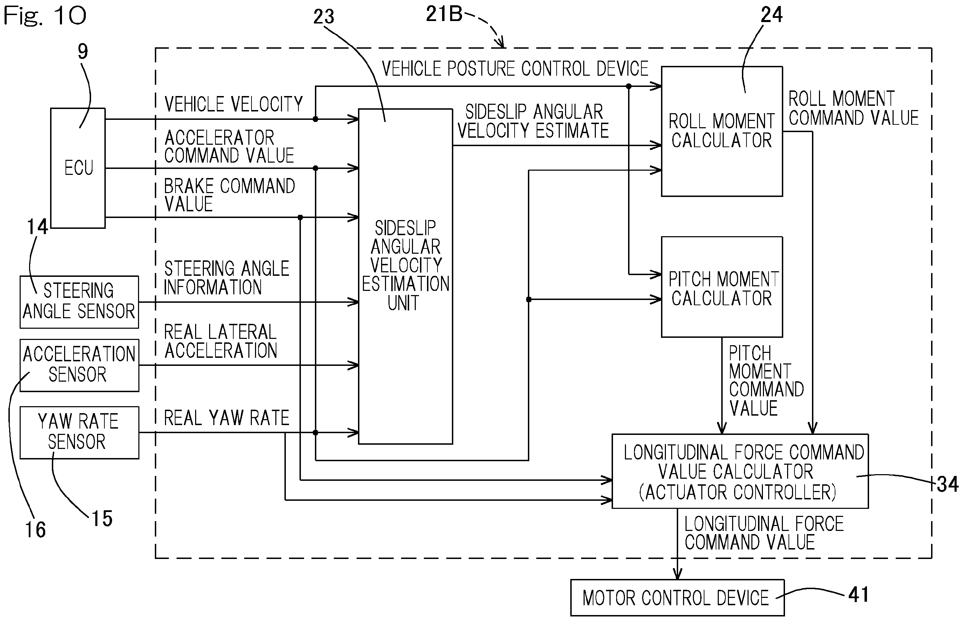

Fig. 10 shows a block diagram of the vehicle posture control device 21B. To provide roll control and pitch control through longitudinal forces by the in-wheel motors 30, this embodiment differs from the block diagram of the first embodiment of Fig. 2 by the addition of a pitch moment calculator 33 and by being equipped with a longitudinal force command value calculator 34 as an actuator controller configured both for counteracting roll and for pitch control.

The functions of a sideslip angular velocity estimation unit 23 and a roll moment calculator 24 are identical to those described in connection with Fig. 2. The pitch moment calculator 33 has the same function as that described in connection with Fig. 6 and calculates the pitch moment command value $M_\theta$ to be generated in the vehicle 1 according to formula (6) mentioned above, from at least a vehicle velocity and a real yaw rate.

The longitudinal forces produced in roll control by means of the roll moment calculator 24 may be such that the total value of longitudinal forces to front and rear right wheels is an approximately equal value to the total value of longitudinal forces to front and rear left wheels. Alternatively, the longitudinal forces produced in roll control or pitch control by means of the roll moment calculator 24 or the pitch moment calculator 33 may be such that the total value of longitudinal forces to front and rear right wheels is an approximately equal value to the total value of longitudinal forces to front and rear left wheels.

The pitch moment calculator 33 may be configured such that a larger pitch angle in the direction of forward diving is generated in the vehicle 1 in response to a greater absolute value of a yaw rate.

The longitudinal force command value calculator 34 calculates the longitudinal forces $FX_1$ according to formulae (29) to (32) that are discussed below, from the roll moment command value $M_\phi$ and the pitch moment command value $M_\theta$ that are input thereto.

Keep in mind that, since a driver of the vehicle 1 operates the accelerator pedal and the brake pedal to make an input of a longitudinal acceleration to the vehicle 1, the vehicle posture control device 21B adds, to the longitudinal forces $FX_1$ calculated according to formulae (29) to (32) that are discussed below, longitudinal forces commensurate with an accelerator command value and a brake command value and outputs the resultant as a longitudinal force command value. The motor control device 41 regulates the motor torques of the in-wheel motors 30 in accordance with longitudinal force command values that are output from the vehicle posture control device 21B.

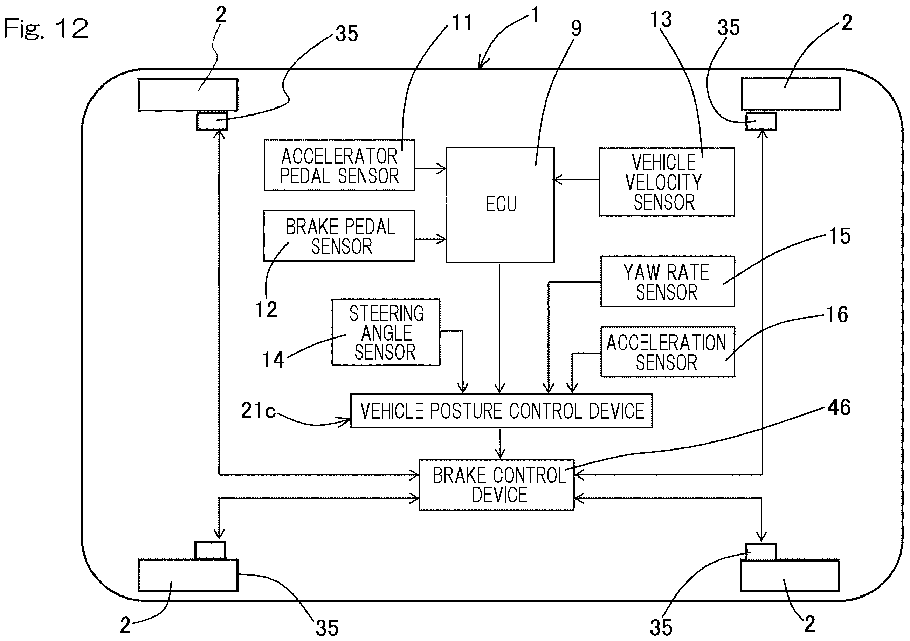

The operation of this embodiment will be described in more particular terms. In a situation where the link arrangements of the suspensions are provided with an anti-dive angle $\theta_f$ and an anti-squat angle $\theta_r$, imparting a braking/driving force (i.e., a longitudinal force) to a tire will result in the creation of a vertical force (i.e., an anti-dive force or an anti-squat force) commensurate with each of the angles. By exploiting this, various moments can be generated without any new device added. Especially, with a brake 35 (Fig. 12) or an in-wheel motor 30 which provides a longitudinal force that acts on a tire contact surface and thereby creates a larger anti-dive angle or anti-squat angle, a greater vertical force can be produced with a given braking/driving force. In case of an engine-powered vehicle or an on-board type motor-powered vehicle which transmits a braking/driving force through a vehicle axle, the anti-dive angle or the anti-squat angle is smaller as compared to that for a vehicle equipped with in-wheel motors 30, although it is still possible to produce vertical forces in a similar mechanism.

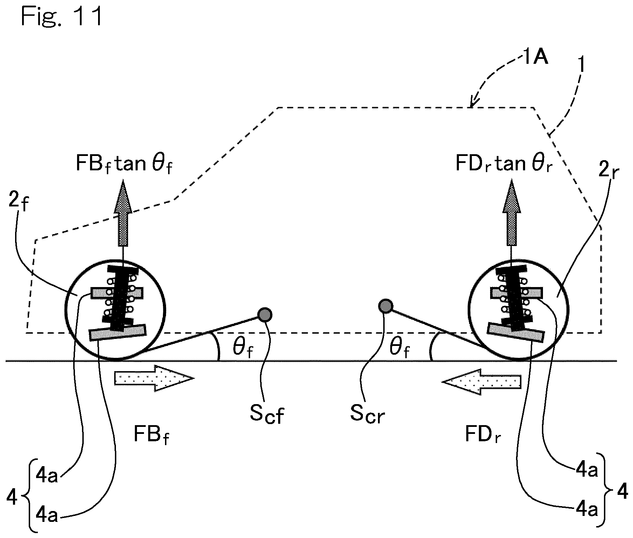

A vertical force $FS_i$ is produced through a suspension 4 in response to a longitudinal force $FX_i$ in the following ways. Note that, in Fig. 11, especially, the braking force acting on a front wheel $2_f$ and the driving force acting on a rear wheel $2_r$ among the longitudinal forces $FX_i$, are denoted as $FB_f$ and $FD_r$, to illustrate the relationship between the orientations of longitudinal forces and vertical forces. Also, the vertical force produced as a result of $FB_f$ mentioned above and the vertical force produced as a result of $FD_r$ mentioned above are shown as $FB_f tan\theta_f$ and $FD_r tan\theta_r$. The symbols Scf and Scr refer to the instant centers of rotation of the front and rear suspensions:

[Math 11]

$$FS_1 = -FX_1 tan\theta_f \qquad (17)$$

$$FS_2 = -FX_2 tan\theta_f \qquad (18)$$

$$FS_3 = FX_3 tan\theta_r \qquad (19)$$

$$FS_4 = FX_4 tan\theta_r \qquad (20)$$

Substituting formulae (17) to (20) into formulae (7) and (8) results in the following calculation formulae for the roll moment $M_\phi$ and the pitch moment Me:

[Math 12]

$$M_\phi = \frac{ds_f}{2} tan\theta_f(-FX_1 + FX_2) + \frac{ds_r}{2} tan\theta_r(FX_3 - FX_4)$$

$$(21)$$

$$M_\theta = ls_f tan\theta_f(FX_1 + FX_2) + ls_r tan\theta_r(FX_3 + FX_4)$$

$$(22)$$

When a longitudinal force to a tire is utilized, its impacts on the planar motion of the vehicle must be considered. It is preferred that little change in a longitudinal acceleration and a yaw rate $\gamma$ occurs as a result of control, so as not to have a driver of the vehicle experience an awkward feeling that comes from that control. Hence, the following conditions are additionally defined.

The occurrence of a longitudinal acceleration is mitigated by setting the total value of longitudinal forces to the four wheels to zero, as seen in formula (23). A change in the yaw rate is mitigated by making equal the total value of longitudinal forces to front and rear right wheels and the total value of longitudinal forces to front and rear left wheels, as can be seen in formula (24):

[Math 13]

$$FX_1 + FX_2 + FX_3 + FX_4 = 0 \qquad (23)$$

$$FX_1 + FX_3 - (FX_2 + FX_4) = 0 \qquad (24)$$

From formulae (23) and (24), the relationship among the longitudinal forces $FX_i$ is derived as:

[Math 14]

$$FX_1 + FX_3 = 0 \qquad (25)$$

$$FX_2 + FX_4 = 0 \qquad (26)$$

With formulae (25) and (26), $FX_3$ and $FX_4$ can be eliminated from formulae (21) and (22) to give the following:
[Math 15]

$$M_\phi = \left(\frac{ds_f}{2} tan\theta_f + \frac{ds_r}{2} tan\theta_r\right)(-FX_1 + FX_2)$$

$$(27)$$

$$M_\theta = \left(ls_f tan\theta_f - ls_r tan\theta_r\right)(FX_1 + FX_2)$$

$$(28)$$

By formulae (27) and (28), the longitudinal forces $FX_i$ required to generate the roll moment $M_\phi$ and the pitch moment $M_\theta$ can be calculated as follows. The longitudinal force command value calculator 34 of Fig. 10 performs calculations according to formulae (29) to (32) and outputs the calculation result according to each formula as a longitudinal force command value:
[Math 16]

$$FX_1 = -\frac{M_\phi}{ds_f tan\theta_f + ds_r tan\theta_r} + \frac{M_\theta}{2\left(ls_f tan\theta_f - ls_r tan\theta_r\right)}$$

$$(29)$$

$$FX_2 = \frac{M_\phi}{ds_f tan\theta_f + ds_r tan\theta_r} + \frac{M_\theta}{2\left(ls_f tan\theta_f - ls_r tan\theta_r\right)}$$

$$(30)$$

$$FX_3 = \frac{M_\phi}{ds_f tan\theta_f + ds_r tan\theta_r} - \frac{M_\theta}{2\left(ls_f tan\theta_f - ls_r tan\theta_r\right)}$$

$$(31)$$

$$FX_4 = -\frac{M_\phi}{ds_f tan\theta_f + ds_r tan\theta_r} - \frac{M_\theta}{2\left(ls_f tan\theta_f - ls_r tan\theta_r\right)}$$

$$(32)$$

To generate the pitch moment $M_\theta$ through the longitudinal forces FXi, it is a necessary requirement from formula (28) that the product $ls_f tan\theta_f$ between the tangent $tan\theta_f$ of the anti-dive angle $\theta_f$ provided to a link arrangement of a suspension at a front wheel $2_f$ and the distance $ls_f$ in a longitudinal direction between the point of center of gravity of the vehicle and the position of a bearing point of the spring and the damper of the suspension at that front wheel be different from the product $ls_r tan\theta_r$ between the tangent $tan\theta_r$ of the anti-squat angle $\theta_r$ provided to a link arrangement of a suspension at a rear wheel $2_r$ and the distance $ls_r$ in the longitudinal direction between the point of center of gravity of the vehicle and the position of a bearing point of the spring and the damper of the suspension at that rear wheel. When roll and pitch control are to be implemented in a manner described above, there is no controllable degree of freedom left in the longitudinal forces to the four wheels, because of the presence of the four constraint conditions according to formulae (21) to (24). Consequently, a vertical motion (i.e., a heave) of the vehicle, which is not controllable, is produced from the sum of the vertical forces, as described by formula (33):

[Math 17]

$$\sum_{i=1}^{4} FS_i = -(FX_1 + FX_2)\big(tan\theta_f + tan\theta_r\big) \qquad (33)$$

Our previous research shows that it is preferred to produce a heave in an upward direction along with a forward diving pitch in a vehicle during turning thereof, to improve the maneuverability thereof.

This is described, for example, in Non-patent Document 2.

In order to produce a heave in an upward direction along with a forward diving pitch in a vehicle during turning thereof, the pitch moment $M_\theta$ according to formula (28) and the sum of the longitudinal forces to the four wheels according to formula (33):

[Math 18]

$$\sum_{i=1}^{4} FS_i$$

both must be positive. Given that the anti-dive angle $\theta_f$ at a front wheel and the anti-squat angle $\theta_r$ at a rear wheel provided to the link arrangements of suspensions in a typical vehicle are both positive, the following relation is obtained from formula (33):

[Math 19]

$$FX_1 + FX_2 < 0 \qquad (34)$$

Further, the following relation is obtained from formulae (28) and (34). Formula (35) represents a condition of the vehicle required to produce a heave in an upward direction along with a forward diving pitch in the vehicle during turning thereof:

$$ls_f tan\theta_f - ls_r tan\theta_r < 0 \qquad (35)$$

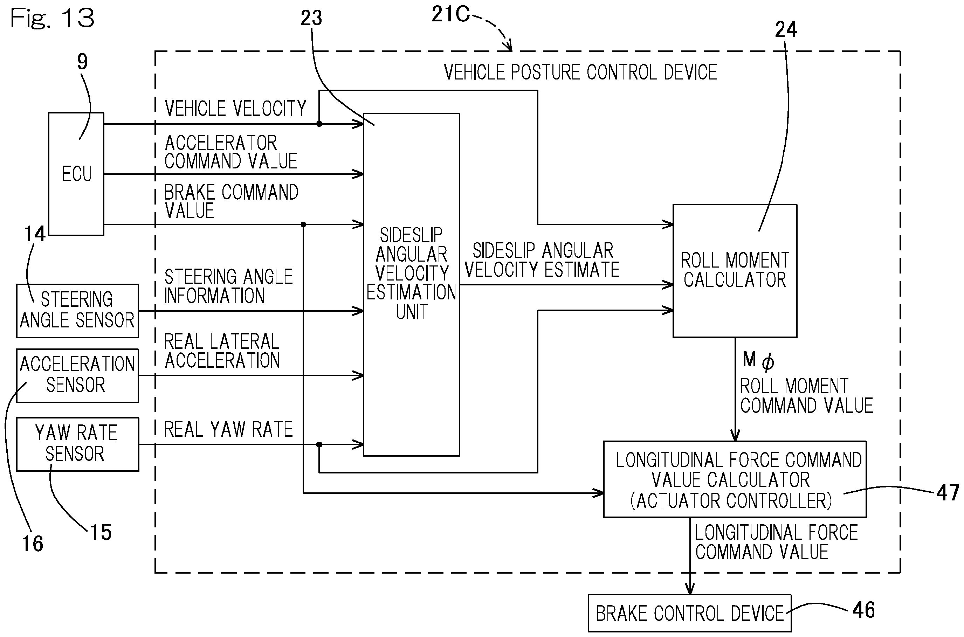

Figs. 12 and 13 depict yet another embodiment of the present invention. This embodiment pertains to an example in which roll is controlled by using brakes 35 equipped to four wheels 2 that are on the front and the rear and for the left and the right as shown in Fig. 12, in place of the active stabilizers 5 of Fig. 1 or the in-wheel motors 30 of Fig. 9, as an actuator that generates a roll moment in the vehicle 1 for the purpose of counteracting roll. Each of the brakes 35 is a friction brake such as an electric brake or a hydraulic brake. A brake control device 46 for controlling the brakes for the four wheels is also equipped.

Fig. 13 shows a block diagram of a vehicle posture control device 21C, in accordance with this embodiment. The pitch moment calculator 33 in the block diagram of Fig. 6 or 10 is not present. The functions of a sideslip angular velocity estimation unit 23 and a roll moment calculator 24 are identical to those in the example of Fig. 2. A longitudinal force command value calculator 47 is equipped as an actuator controller for counteracting roll. The longitudinal force command value calculator 47 calculates the longitudinal forces $FX_i$ according to formulae (40) to (47) as discussed below, from a roll moment command value that is input thereto. Keep in mind that, since a driver of the vehicle operates the brake pedal to make an input of a deceleration to the vehicle, the vehicle posture control device 21C adds, to the longitudinal forces $FX_i$ calculated according to formulae (29) to (32) that are discussed below, longitudinal forces (i.e., braking forces) commensurate with a brake command value and outputs the resultant as a longitudinal force command value. The brake control device 46 regulates each of the brakes 35 in accordance with the longitudinal force command value that is output from the vehicle posture control device 21C.

Next, a scenario will be considered in which an existing brake system is used to implement roll control in accordance with the present invention. The existing brake system refers to a system in which the output from a brake pedal sensor that senses an input to a brake pedal is, in turn, input to an ECU 9 that transforms the same to a brake command value for execution of brake control. Since it is a braking force that is produced by the brake system, a condition for the longitudinal forces $FX_i$ will be defined as follows:

$$FX_i \leqq 0 \qquad (36)$$

Roll control will result in a longitudinal acceleration $a_x$ of the vehicle as described by formula (37). The suffix x of said symbol $a_x$ represents the x-axis of the coordinate system in a two-wheel model and refers to a longitudinal direction of the vehicle.

[Math 20]

$$a_x = \frac{\sum_{i=1}^{4} FX_i}{m}$$

$$(37)$$

From formula (37), to keep the deceleration of the vehicle to a minimum during the roll control, a braking force from the control needs to be generated only in a single pair of diagonally opposite wheels.

Also, since the longitudinal forces $FX_i$ will be negative (or no greater than zero), there is switching of wheels to be controlled depending on the sign of the roll moment $M_\phi$ to be generated as shown below:

[Math 21]

If the roll moment $M_\phi$ is positive, then

$$M_\phi = -\frac{ds_f}{2} tan\theta_f FX_1 - \frac{ds_r}{2} tan\theta_r FX_4$$

$$(38)$$

If the roll moment $M_\phi$ is negative, then

$$M_\phi = \frac{ds_f}{2} tan\theta_f FX_2 + \frac{ds_r}{2} tan\theta_r FX_3$$

$$(39)$$

Further, formula (24) must be satisfied so as not to generate a yaw moment as a result of the roll control. For this reason, the longitudinal force command value calculator 47, which is the aforementioned actuator controller, outputs longitudinal force command values that apply, for example, approximately equal braking forces to diagonally opposite wheels 2 of the vehicle 1.

Accordingly, the longitudinal forces $FX_i$ when using an existing brake system to carry out roll control in accordance with the present invention are defined as follows:

[Math 22]

If the roll moment $M_\phi$ is positive, then

$$FX_1 = -\frac{2M_\phi}{ds_f tan\theta_f + ds_r tan\theta_r}$$

$$(40)$$

$$FX_2 = 0 \qquad\qquad (41)$$

$$FX_3 = 0 \qquad\qquad (42)$$

$$FX_4 = -\frac{2M_\phi}{ds_f \tan\theta_f + ds_r \tan\theta_r}$$

$$(43)$$

If the roll moment $M_\phi$ is negative, then

$$FX_1 = 0 \qquad\qquad (44)$$

$$FX_2 = \frac{2M_\phi}{ds_f \tan\theta_f + ds_r \tan\theta_r}$$

$$(45)$$

$$FX_3 = \frac{2M_\phi}{ds_f \tan\theta_f + ds_r \tan\theta_r}$$

$$(46)$$

$$FX_4 = 0 \qquad\qquad (47)$$

For all the types of roll control described above, the roll moment $M_\phi$ to be generated is calculated according to formula (5), from the sideslip angular velocity β"·" and the yaw rate r as they are being generated in the vehicle 1. The yaw rate r can be measured with a yaw rate sensor, which is mounted in a vehicle as a constituent component of a vehicle electronic stability control device. On the other hand, to make a direct measurement of a sideslip angular velocity β"·", a costly specialized measurement instrument is required. As an approach to being dispensed with a costly specialized measurement instrument, the sideslip angular velocity estimation unit 23 may estimate a sideslip angular velocity β"·" from a steering angle δ by employing a vehicle model or may estimate the same from a yaw rate r measured with the yaw rate sensor 15 mounted in the vehicle.

The approach to estimating a sideslip angular velocity β"·" from a steering angle δ by employing a vehicle model involves the following transfer function of the sideslip angular velocity β"·" in response to the steering angle δ, supposing that the aforementioned two-wheel model is employed by way of example:

[Math 23]

$$\frac{\dot{\beta}}{\delta(s)} = G_\delta^\beta(0)\frac{(1 + T_\beta s)s}{1 + \dfrac{2\varsigma s}{\omega_n} + \dfrac{s^2}{\omega_n{}^2}}$$

$$(48)$$

Note that $G_\delta^\beta(0)$ represents a sideslip angle gain constant, $T_\beta$ represents a sideslip angle time constant, $\varsigma$ represents a damping ratio of the yaw response of the vehicle to steering, and $\omega_n$ represents a natural frequency of the yaw response of the vehicle to steering.

Steering angle information obtained by a calculation involving an angle of rotation of, for example, a gear, the amount of displacement of a rack, etc. that is output from a sensor associated with a steering rack can be used as the steering angle $\delta$, in addition to a value calculated from the output from the steering angle sensor 14 provided in a steering unit.

The approach to estimating a sideslip angular velocity β"·" from a yaw rate r involves, for example, the use of the relation according to formula (3). Formula (3) is modified to obtain the following formula:

[Math 24]

$$\dot{\beta} = \frac{a_y}{V} - r$$

$$(49)$$

By using formula (49), a sideslip angular velocity β"·" can be calculated from a lateral acceleration $a_y$ and a yaw rate r that are measured with sensors mounted in the vehicle. Yet, on a cant road where the lateral acceleration $a_y$ changes with the slope thereof, an error could occur in the estimated sideslip angular velocity β"·". Also, since the model used in both of formulae (48) and (49) is a linear tire model, there may be a larger error under conditions where the lateral force to a tire may saturate. Further, in situations where a longitudinal acceleration is involved, a larger error may likewise occur. As an approach to reducing such errors, a method that uses a nonlinear tire model to estimate a sideslip angular velocity β"·" is proposed in the art (see Non-patent document 3).

This estimation method employs a nonlinear tire model as described by formula (50):

[Math 25]

$$Y_T = -\left[K_T\beta_T - sign(\beta_T)\frac{K_T{}^2}{4\mu W_T}\beta_T{}^2\right]\sqrt{1 - \left(\frac{X_T}{\mu W_T}\right)^2}$$

$$(\text{when: } |\beta_T| < \frac{2\mu W_T}{K_T})$$

$$= -sign(\beta_T)\mu W_T\sqrt{1 - \left(\frac{X_T}{\mu W_T}\right)^2}$$

$$(\text{when: } |\beta_T| \geq \frac{2\mu W_T}{K_T})$$

$$(50)$$

Note that the suffix T represents either a front wheel (f) or a rear wheel (r), $K_T$ indicates the cornering power of a tire, $\beta_T$ indicates a sideslip angle at the position of a front wheel or a rear wheel, $\mu$ indicates a coefficient of road friction, $W_T$ indicates a vertical load on a tire, and $X_T$ indicates a longitudinal force to a tire.

From a lateral force $Y_T$ to a tire as calculated according to formula (50), a sideslip angular velocity β"·" is estimated according to formula (51). The yaw rate r in formula (50) is a measurement by the yaw rate sensor 15 mounted in the vehicle:

[Math 26]

$$\dot{\beta} = \frac{Y_f + Y_r}{mV} - r$$

$$(51)$$

Because the nonlinear tire model in formula (50) takes into account the saturation of a lateral force $Y_T$ to a tire as well as a vertical load on a tire, the accuracy of the estimate of a lateral force $Y_T$ to a tire is improved. Thus, the use of formula (51) allows for the accurate estimation of a sideslip angular velocity $\beta$ "·" from a yaw rate r measured with the yaw rate sensor 15 mounted in the vehicle.

Although the present invention has been described in terms of the preferred embodiments thereof with reference to the drawings, various additions, modifications, or deletions may be made without departing from the scope of the invention. Accordingly, such variants are included within the scope of the present invention.

[Reference Symbols]

| | |
|---|---|
| 1 | vehicle |
| 1A | vehicle body |
| 2 | wheel |
| 4 | suspension device |
| 4a | suspension arm |
| 4A | active suspension |
| 5 | active stabilizer |
| 7A | support portion vertical force varying mechanism |
| 8 | electric motor |
| 9 | ECU |
| 11 | accelerator pedal sensor |
| 12 | brake pedal sensor |
| 13 | vehicle velocity sensor |
| 14 | steering angle sensor |
| 15 | yaw rate sensor |
| 16 | acceleration sensor |
| 21 | vehicle posture control device |
| 22 | stabilizer control device |
| 23 | sideslip angular velocity estimation unit |
| 24 | roll moment calculator |
| 21A to 21C | vehicle posture control device |
| 25 | actuator controller |
| 26 | front and rear wheels roll moment calculator |
| 27 | command transformer |
| 31 | suspension control device |
| 33 | pitch moment calculator |
| 34 | longitudinal force command value calculator |
| 34A | actuator controller |
| 30 | in-wheel motor |
| 35 | brake |
| 46 | brake control device |
| 41 | motor control device |

**Claims**

1. A vehicle posture control device configured to be installed in a vehicle provided with an actuator configured to generate a roll moment, the device comprising:

a roll moment calculator configured to calculate a roll moment command value to control the actuator such that a roll motion is generated in conjunction with a yaw motion in the vehicle during turning thereof, the roll moment calculator being configured to calculate the roll moment command value for output, on the basis of a sideslip angular velocity and a vehicle velocity of the vehicle; and

an actuator controller configured to control the actuator by using the calculated roll moment command value.

2. The vehicle posture control device as claimed in claim 1, wherein the roll moment calculator comprises a formula according to which the roll moment command value is calculated and which includes a term that compensates for phase delay of a roll motion resulting from a yaw rate.

3. The vehicle posture control device as claimed in claim 1 or 2, wherein the vehicle is further provided with an actuator configured to generate a pitch moment during turning thereof, and the vehicle posture control device further comprises:

a pitch moment calculator configured to calculate a pitch moment command value, the pitch moment calculator being configured to calculate the pitch moment command value, on the basis of at least a yaw rate and the vehicle velocity of the vehicle;

wherein the pitch moment calculator controls the actuator by using the calculated pitch moment command value.

4. The vehicle posture control device as claimed in claim 3, wherein the pitch moment calculator is configured to provide the pitch moment command value as a value that compensates for a delay spanning between generation of the pitch moment and occurrence of change of a pitch angle in the vehicle and caused by characteristics of a suspension.

5. The vehicle posture control device as claimed in any one of claims 1 to 4, wherein the actuator configured to generate the roll moment is a device mounted to a suspension and configured to apply a force in a vertical direction to the vehicle through a constituent member of the suspension to generate the roll moment.

6. The vehicle posture control device as claimed in claim 3 or 4, wherein at least one of the actuator configured to generate the roll moment or the actuator configured to generate the pitch moment is a device mounted to a suspension and configured to apply a force in a vertical direction to the vehicle through a constituent member of the suspension to generate either one of the roll moment or the pitch moment.

7. The vehicle posture control device as claimed in claim 5, wherein the actuator configured to generate the roll moment is a device capable of producing a longitudinal force to a tire and configured to apply a vertical force to the vehicle by cooperating with a link arrangement of a suspension with an anti-dive angle at a front wheel and an anti-squat angle at a rear wheel.

8. The vehicle posture control device as claimed in claim 6, wherein the actuator configured to generate the roll moment and the actuator configured to generate the pitch moment are represented by a device capable of producing a longitudinal force to a tire and configured to apply a vertical force to the vehicle by cooperating with a link arrangement of a suspension with an anti-dive angle at a front wheel and an anti-squat angle at a rear wheel.

9. The vehicle posture control device as claimed in claim 3 or 4, wherein the pitch moment calculator is configured such that a larger pitch angle in the direction of forward diving is generated in the vehicle in response to a greater absolute value of a yaw rate.

10. The vehicle posture control device as claimed in claim 8, wherein the vehicle posture control device is configured to be installed in a vehicle in which a magnitude of a product between a tangent of an anti-dive angle at a front wheel and a distance in a longitudinal direction between a point of center of gravity of the vehicle and a point of a suspension at the front wheel at which a spring and a damper thereof bear a sprung mass of the vehicle is smaller than a magnitude of a product between a tangent of an anti-dive angle at a rear wheel and a distance in the longitudinal direction between the point of center of gravity of the vehicle and a point of a suspension at the rear wheel at which a spring and a damper thereof bear the sprung mass of the vehicle.

11. The vehicle posture control device as claimed in any one of claims 1 to 10, wherein the roll moment calculator is configured to estimate the sideslip angular velocity from steering angle information sensed by a steering angle sensor equipped to the vehicle.

**12.** The vehicle posture control device as claimed in any one of claims 1 to 10, wherein the roll moment calculator is configured to estimate the sideslip angular velocity at least from a yaw rate sensed by a yaw rate sensor equipped to the vehicle.

**13.** The vehicle posture control device as claimed in claim 7, wherein the longitudinal force produced in roll control by means of the roll moment calculator is such that a total value of longitudinal forces to front and rear right wheels is an approximately equal value to a total value of longitudinal forces to front and rear left wheels.

**14.** The vehicle posture control device as claimed in claim 8, wherein the longitudinal force produced in roll control or pitch control by means of the roll moment calculator or the pitch moment calculator is such that a total value of longitudinal forces to front and rear right wheels is an approximately equal value to a total value of longitudinal forces to front and rear left wheels.

**15.** The vehicle posture control device as claimed in claim 7 or 8, wherein the actuator controller is configured such that, when the actuator configured to generate the roll moment is a device that uses a braking force to generate the roll moment, approximately equal braking forces are applied to diagonally opposite wheels of the vehicle.

**16.** A vehicle comprising a vehicle posture control device as claimed in any one of claims 1 to 15, the vehicle posture control device being installed therein.

Fig. 1

Figure contents:
- ACCELERATOR PEDAL SENSOR
- BRAKE PEDAL SENSOR
- STEERING ANGLE SENSOR
- ECU
- VEHICLE VELOCITY SENSOR
- YAW RATE SENSOR
- ACCELERATION SENSOR
- VEHICLE POSTURE CONTROL DEVICE
- STABILIZER CONTROL DEVICE
- INVERTER
- INVERTER

Fig. 2

Fig. 2 — Block diagram. 21: VEHICLE POSTURE CONTROL DEVICE. 24: ROLL MOMENT CALCULATOR. 23: SIDESLIP ANGULAR VELOCITY ESTIMATION UNIT. 25: ACTUATOR CONTROLLER. 26: FRONT AND REAR WHEELS ROLL MOMENT CALCULATOR. 27: COMMAND TRANSFORMER. 22: STABILIZER CONTROL DEVICE. 9: ECU. 14: STEERING ANGLE SENSOR. 15: ACCELERATION SENSOR. 16: YAW RATE SENSOR.

Inputs: VEHICLE VELOCITY, ACCELERATOR COMMAND VALUE, BRAKE COMMAND VALUE, STEERING ANGLE INFORMATION, REAL LATERAL ACCELERATION, REAL YAW RATE, SIDESLIP ANGULAR VELOCITY ESTIMATE.

$M\phi$ ROLL MOMENT COMMAND VALUE. $M\phi f$ FRONT WHEEL ROLL MOMENT COMMAND VALUE. $M\phi r$ REAR WHEEL ROLL MOMENT COMMAND VALUE.

24

Fig. 3

STEERING ANGLE $\delta$

YAW RATE $r$

SIDESLIP ANGULAR VELOCITY $\dot{\beta}$

LATERAL ACCELERATION $ay$

ROLL ANGLE $\phi$

TIME [s]

## Fig. 4A

Fig. 4B

Fig. 5

ACCELERATOR PEDAL SENSOR

BRAKE PEDAL SENSOR

STEERING ANGLE SENSOR

ECU

VEHICLE VELOCITY SENSOR

YAW RATE SENSOR

ACCELERATION SENSOR

VEHICLE POSTURE CONTROL DEVICE

SUSPENSION CONTROL DEVICE

EP 4 230 447 A1

Fig. 6

EP 4 230 447 A1

## Fig. 7A

## Fig. 7B

Fig. 7C

Fig. 8

STEERING ANGLE δ

YAW RATE r

ROLL ANGLE φ

ROLL MOMENT Mφ

PITCH ANGLE θ

PITCH MOMENT Mθ

TIME [s]

Fig. 9

Fig. 10

EP 4 230 447 A1

Fig. 11

Fig. 12

Fig. 13

21C

VEHICLE POSTURE CONTROL DEVICE

24

ROLL MOMENT CALCULATOR

Mφ ROLL MOMENT COMMAND VALUE

47

LONGITUDINAL FORCE COMMAND VALUE CALCULATOR (ACTUATOR CONTROLLER)

LONGITUDINAL FORCE COMMAND VALUE

46

BRAKE CONTROL DEVICE

23

SIDESLIP ANGULAR VELOCITY ESTIMATION UNIT

SIDESLIP ANGULAR VELOCITY ESTIMATE

VEHICLE VELOCITY

ACCELERATOR COMMAND VALUE

BRAKE COMMAND VALUE

STEERING ANGLE INFORMATION

REAL LATERAL ACCELERATION

REAL YAW RATE

9

ECU

STEERING ANGLE SENSOR

ACCELERATION SENSOR

YAW RATE SENSOR

14

15

16

## INTERNATIONAL SEARCH REPORT

| | |
|---|---|
| International application No. | |
| | **PCT/JP2021/037011** |

**A.    CLASSIFICATION OF SUBJECT MATTER**

*B60G 17/015*(2006.01)i; *B60G 17/016*(2006.01)i; *B60W 40/10*(2012.01)i; *B60W 40/11*(2012.01)i; *B60W 40/112*(2012.01)i; *B60W 40/114*(2012.01)i; *B60T 8/1755*(2006.01)i; *B60W 10/00*(2006.01)i; *B60W 10/20*(2006.01)i; *B60W 10/22*(2006.01)i; *B60W 30/045*(2012.01)i

FI:    B60W40/10; B60W10/00 150; B60W10/20; B60W10/22; B60W40/112; B60W40/114; B60G17/016; B60G17/015 Z; B60W30/045; B60G17/015 B; B60T8/1755 A; B60W40/11

According to International Patent Classification (IPC) or to both national classification and IPC

**B.    FIELDS SEARCHED**

Minimum documentation searched (classification system followed by classification symbols)

B60G17/015; B60G17/016; B60W40/10; B60W40/11; B60W40/112; B60W40/114; B60T8/1755; B60W10/00; B60W10/20; B60W10/22; B60W30/045

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2013-126821 A (TOYOTA MOTOR CORP) 27 June 2013 (2013-06-27) paragraphs [0023]-[0080], fig. 1-7 | 1 |
| Y | | 2-9, 11-16 |
| A | | 10 |
| Y | JP 2008-260439 A (TOYOTA MOTOR CORP) 30 October 2008 (2008-10-30) paragraph [0029], fig. 2 | 2-9, 11-16 |
| Y | JP 2006-027570 A (HONDA MOTOR CO LTD) 02 February 2006 (2006-02-02) paragraph [0027], fig. 2 | 2-9, 11-16 |
| Y | JP 2009-190420 A (TOYOTA MOTOR CORP) 27 August 2009 (2009-08-27) paragraph [0006] | 9, 11-12, 16 |
| A | JP 3-224814 A (MATSUSHITA ELECTRIC IND CO LTD) 03 October 1991 (1991-10-03) specification, page 4, upper right column, line 13 to page 4, lower left column, line 1 | 1-16 |

☐ Further documents are listed in the continuation of Box C.    ☑ See patent family annex.

| | |
|---|---|
| *      Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **04 November 2021** | **22 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
**Information on patent family members**

International application No.

**PCT/JP2021/037011**

| Patent document cited in search report | | | Publication date (day/month/year) | Patent family member(s) | Publication date (day/month/year) |
|---|---|---|---|---|---|
| JP | 2013-126821 | A | 27 June 2013 | (Family: none) | |
| JP | 2008-260439 | A | 30 October 2008 | (Family: none) | |
| JP | 2006-027570 | A | 02 February 2006 | (Family: none) | |
| JP | 2009-190420 | A | 27 August 2009 | US 2010/0076649 A1 paragraph [0006] | |
| JP | 3-224814 | A | 03 October 1991 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020173949 A
- JP 2021034820 A

- JP 2006069527 A
- JP 2007106257 A

**Non-patent literature cited in the description**

- **M. YAMAKADO ; R. TANAKA ; Y. KANO ; M. ABE ; Y. SUZUKI ; S. KOSAKA ; W. CHENG.** Influence of Vehicle Body Motion on the Effects of G-Vectoring Control. *2017 JSAE Spring Convention*

- **T. NAGASHIMA ; Y. NAKAI ; Y. SUZUKI ; Y. NAKANO ; M. YAMAKADO ; Y. KANO ; M. ABE.** Influence of Heave Motion by Driving/ Braking Force Control on the Steering Characteristic. *2019 JSAE Fall Convention*
- **M. ABE et al.** Estimation of Vehicle Side-Slip Angle for DYC by Using On-Board-Tire-Model. *AVEC,* 1998